(19)

Europäisches
Patentamt
European
Patent Office
Office européen
des brevets

(11)  **EP 4 357 833 A1**

(12)

# EUROPEAN PATENT APPLICATION
published in accordance with Art. 153(4) EPC

(43) Date of publication:
**24.04.2024   Bulletin 2024/17**

(21) Application number: 22825273.0

(22) Date of filing: **14.06.2022**

(51) International Patent Classification (IPC):
*G02B 15/14* $^{(2006.01)}$      *G02B 15/22* $^{(2006.01)}$
*G02B 3/00* $^{(2006.01)}$       *G02B 3/04* $^{(2006.01)}$
*G02B 27/64* $^{(2006.01)}$      *G03B 17/12* $^{(2021.01)}$
*H04N 5/225* $^{(2006.01)}$

(52) Cooperative Patent Classification (CPC):
**G02B 3/00; G02B 3/04; G02B 15/14; G02B 15/22;
G02B 27/64; G03B 17/12**

(86) International application number:
**PCT/KR2022/008394**

(87) International publication number:
**WO 2022/265348 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021   KR 20210079515**

(71) Applicant: **Samsung Electronics Co., Ltd.
Suwon-si, Gyeonggi-do 16677 (KR)**

(72) Inventors:
• **SEO, Jungpa**
  **Suwon-si, Gyeonggi-do 16677 (KR)**
• **HEU, Min**
  **Suwon-si, Gyeonggi-do 16677 (KR)**
• **LEE, Hwanseon**
  **Suwon-si, Gyeonggi-do 16677 (KR)**

(74) Representative: **HGF
HGF Limited
1 City Walk
Leeds LS11 9DX (GB)**

(54)   **LENS ASSEMBLY AND ELECTRONIC DEVICE COMPRISING SAME**

(57)      Disclosed are a lens assembly and an electronic device including the same.

The lens assembly includes a plurality of lenses arranged from an object side to an image side on which an image plane is located, wherein the plurality of lenses include a first lens group that includes at least one lens having a positive refractive power, and is fixed to maintain a constant distance from the image plane during focusing, and a second lens group that includes a lens having at least one aspheric surface, and is configured to perform image plane alignment according to a change in an object distance of an object. In addition, various embodiments are possible.

**EP 4 357 833 A1**

# FIG. 1

100-1

G11    G21

img

O                                                    I

OA

L11  L21  L31 L41    L51                         OD

O                                                    I

O                                                    I

S10
S5  S7  S9
S1  S2  S3  S4  S6  S8                    S11  S12
(ST)

2

**Description**

Technical Field

Various embodiments relate to a lens assembly and an electronic device including the same, for example, to a miniaturized lens assembly and an electronic device including the same.

Background Art

The variety of services and additional functions provided by electronic devices has been expanding gradually. Electronic devices, for example, mobile devices or user devices, may provide various services through various sensor modules. Electronic devices may provide multimedia services, for example, picture services or video services. As the use of electronic devices has increased, the use of cameras functionally connected to the electronic devices has also gradually increased. In response to such user demand, the performance and/or resolution of cameras of electronic devices have improved. Cameras of electronic devices may be used to take various types of pictures such as landscape pictures, portrait pictures, or selfies. In addition, such multimedia, for example, pictures or videos, may be shared via social networking sites or other media.

Electronic devices are equipped with a plurality of optical devices to improve the quality of captured images and add various visual effects to the captured images. For example, it is possible to obtain object images through a plurality of cameras (e.g., a telephoto camera and a wide-angle camera) having different optical characteristics, and obtain a captured image by synthesizing the object images. Such optical devices may be installed in electronic devices specialized for an image capture function, such as digital cameras, and are installed in miniaturized electronic devices to be carried by users, such as mobile communication terminals.

Disclosure

Technical Problem

As the rate of use of imaging devices in portable devices has increased, the demand for miniaturization has also increased. However, difficulties arise in controlling aberration due to miniaturization of a lens assembly. Telephoto lenses tend to increase in size and it is possible to reduce the size by using a reflective member, in which case, focusing is performed by moving an entire lens group and thus requires a large space for the movement of the lens group, making it difficult to reduce the size.

Various embodiments may provide, for example, a compact lens assembly in an electronic device (e.g., a portable terminal).

In addition, various embodiments may provide, for example, an electronic device including a compact lens assembly.

Technical Solution

According to an embodiment, a lens assembly includes a plurality of lenses arranged from an object side to an image side on which an image plane is located, wherein the plurality of lenses include: a first lens group that includes at least one lens having a positive refractive power, and is fixed to maintain a constant distance from the image plane during focusing; and a second lens group that includes a lens having at least one aspheric surface, and is configured to perform image plane alignment according to a change in an object distance of an object, and the lens assembly satisfies the following Equation:

<Equation>

$$FOV < 15 \text{ (degree)},$$

wherein FOV denotes a half-angle of view of the lens assembly.

According to an embodiment, an electronic device includes: a lens assembly including a plurality of lenses arranged from an object side to an image side on which an image plane is located; at least one camera configured to obtain information about an object from light incident through the lens assembly; and an image signal processor configured to process an image of the object, based on the information, wherein the plurality of lens of the lens assembly include a first lens group that includes at least one lens having a positive refractive power, and is fixed to maintain a constant distance from the image plane during focusing, and a second lens group that includes a lens having at least one aspheric surface, and is configured to perform image plane alignment according to a change in an object distance of an object, and the lens assembly satisfies the following Equation:

<Equation>

$$FOV < 15 \text{ (degree)},$$

wherein FOV denotes a half-angle of view of the lens assembly.

Advantageous Effects

A lens assembly according to various embodiments is, for example, compact and capable of performing focusing. The lens assembly according to various embodiments may facilitate aberration correction by appropriately distributing the refractive power of lenses. In addition, an electronic device including the lens assembly according to various embodiments is, for example, compact and capable of capturing multimedia (e.g., pictures or videos) with high performance. In addition, the lens assembly according to various embodiments includes a reflective member and is capable of performing camera shake correction by using the reflective member. Besides, various other effects may also be directly or indirectly understood and provided through the present disclosure.

Description of Drawings

FIG. 1 illustrates a lens assembly according to a first numerical embodiment from among various embodiments.
FIG. 2 is an aberration diagram of a lens assembly for an infinite object distance, according to the first numerical embodiment from among various embodiments.
FIG. 3 is an aberration diagram of a lens assembly for an object distance of 80 cm, according to the first numerical embodiment from among various embodiments.
FIG. 4 illustrates an example in which an optical path is bent when the lens assembly of the first numerical embodiment illustrated in FIG. 1 includes a reflective member.
FIG. 5 illustrates a lens assembly according to a second numerical embodiment from among various embodiments.
FIG. 6 is an aberration diagram of a lens assembly for an infinite object distance, according to the second numerical embodiment from among various embodiments.
FIG. 7 is an aberration diagram of a lens assembly for an object distance of 80 cm, according to the second numerical embodiment from among various embodiments.
FIG. 8 illustrates a lens assembly according to a third numerical embodiment from among various embodiments.
FIG. 9 is an aberration diagram of a lens assembly for an infinite object distance, according to the third numerical embodiment from among various embodiments.
FIG. 10 is an aberration diagram of a lens assembly for an object distance of 80 cm, according to the third numerical embodiment from among various embodiments.
FIG. 11 illustrates a lens assembly according to a fourth numerical embodiment from among various embodiments.
FIG. 12 is an aberration diagram of a lens assembly for an infinite object distance, according to the fourth numerical embodiment from among various embodiments.
FIG. 13 is an aberration diagram of a lens assembly for an object distance of 80 cm, according to the fourth numerical embodiment from among various embodiments.
FIG. 14 illustrates a lens assembly according to a fifth numerical embodiment from among various embodiments.
FIG. 15 is an aberration diagram of a lens assembly for an infinite object distance, according to the fifth numerical embodiment from among various embodiments.
FIG. 16 is an aberration diagram of a lens assembly for an object distance of 80 cm, according to the fifth numerical embodiment from among various embodiments.
FIG. 17 illustrates a front surface of a mobile device including a lens assembly, according to various embodiments.
FIG. 18 illustrates a back surface of a mobile device including a lens assembly, according to various embodiments.
FIG. 19 is a block diagram of an electronic device in a network environment, according to various embodiments.
FIG. 20 is a block diagram of a camera module in an electronic device, according to various embodiments.

Mode for Invention

Hereinafter, various embodiments of the present disclosure will be described with reference to the accompanying drawings. However, it should be understood that the present disclosure is not limited to particular embodiments but also includes various modifications, equivalents, and/or alternatives thereof. With regard to the description of the drawings, similar reference numerals may be used to refer to similar elements.

Electronic devices according to various embodiments disclosed herein may include various types of devices. The electronic devices may include, for example, portable communication devices (e.g., smart phones), computer devices, portable multimedia devices, portable medical devices, cameras, wearable devices, or home appliances. The electronic devices according to embodiments of the present disclosure are not limited to the above devices.

It should be appreciated that various embodiments of the present disclosure and the terms used therein are not intended to limit the technological features set forth herein to particular embodiments, and include various changes, equivalents, or alternatives for a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). When an element (e.g., a first element) is referred to, with or without the term "operatively" or "communicatively", as being "coupled with," "coupled to," "connected with," or "connected to" another element (e.g., a second element), it means that the element may be connected to the other element directly (e.g., in a wired manner), wirelessly, or via a third element.

The term "module" used in various embodiments of the present disclosure may include a unit implemented in hardware, software, or firmware, and may be used interchangeably with terms such as "logic", "logic block", "part", or "circuitry". A module may be a single integral component, or a minimum unit or part thereof, adapted to perform one or more functions. For example, according to an embodiment, a module may be implemented in the form of an application-specific integrated circuit (ASIC).

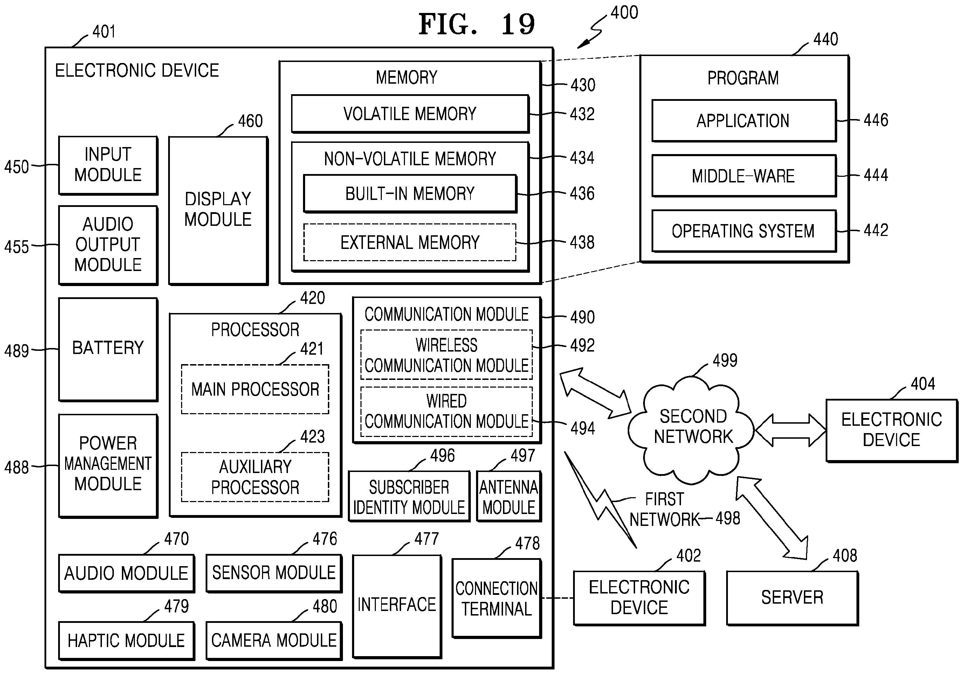

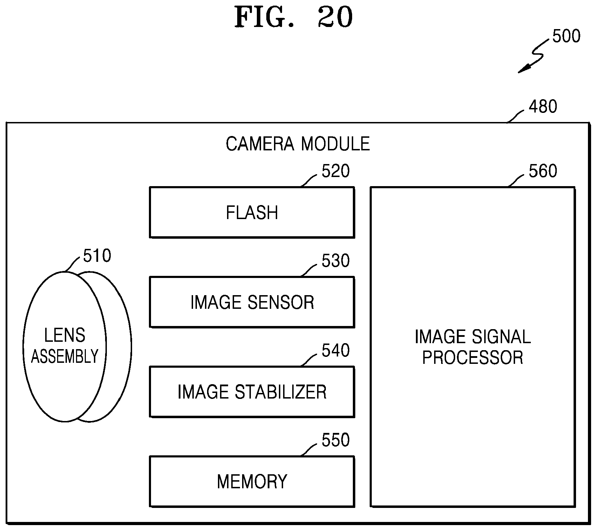

Referring to FIGS. 19 and 20, various embodiments of the present disclosure may be implemented as a storage medium (e.g., an internal memory 436) readable by a machine (e.g., an electronic device 401) or may be implemented as software (e.g., a program 440) including one or more instructions stored in an external memory 438. For example, a processor (e.g., a processor 420) of the machine (e.g., the electronic device 401) may call and execute at least one of the one or more stored instructions from the storage medium. This enables the machine to be operated to perform at least one function according to the called at least one instruction. The one or more instructions may include code generated by a compiler or code executable by an interpreter. The machine-readable storage medium may be provided in the form of a non-transitory storage medium. Here, the term 'non-transitory' merely means that the storage medium does not refer to a transitory electrical signal but is tangible, and does not distinguish whether data is stored semi-permanently or temporarily on the storage medium.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a compact disc read-only memory (ROM) (CD-ROM)), or may be distributed online (e.g., downloaded or uploaded) through an application store (e.g., Play Store™) or directly between two user devices (e.g., smart phones). In a case of online distribution, at least a portion of the computer program product may be temporarily stored in a machine-readable storage medium such as a manufacturer's server, an application store's server, or a memory of a relay server.

According to various embodiments, each component (e.g., a module or a program) of the above-described components may include a single or a plurality of entities, and some of the plurality of entities may be separately arranged in another component. According to various embodiments, one or more components or operations of the above-described corresponding components may be omitted, or one or more other components or operations may be added. Alternatively or additionally, a plurality of components (e.g., a module or a program) may be integrated into one component. In this case, the integrated component may perform one or more functions of each component of the plurality of components in the same or similar manner as those performed by a corresponding component of the plurality of components before the integration. According to various embodiments, operations performed by a module, a program, or another component may be sequentially, in parallel, repetitively, or heuristically executed, one or more of the operations may be executed in a different order, omitted, or one or more other operations may be added. In the present disclosure, the term 'user' may refer to a person using an electronic device or a device (e.g., an artificial intelligence electronic device) using an electronic device.

Hereinafter, a lens assembly according to various embodiments and a device including the lens assembly will be described in detail with reference to the accompanying drawings.

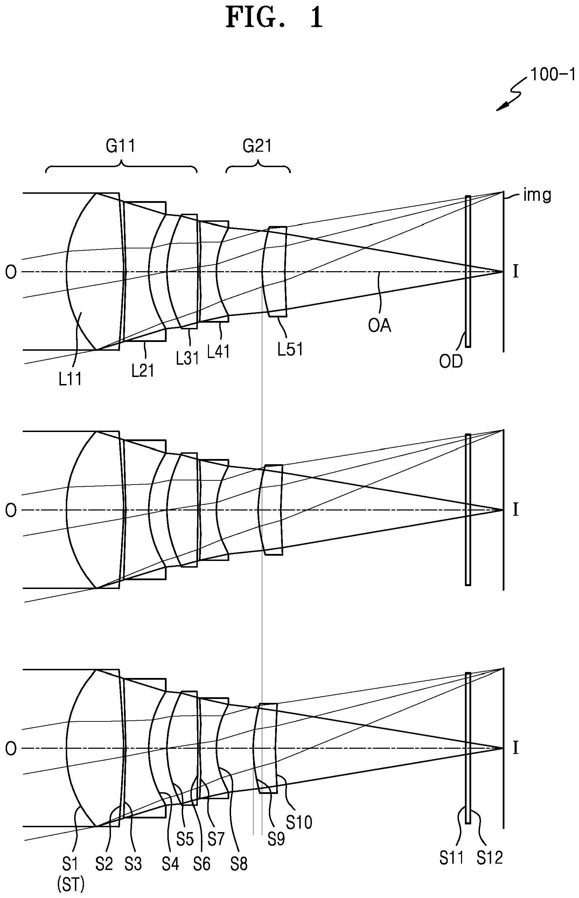

FIG. 1 illustrates a lens assembly 100-1 according to a first numerical embodiment from among various embodiments.

The lens assembly 100-1 according to various embodiments includes a first lens group G11 that is fixed during focusing, and a second lens group G21 that performs focusing. Focusing may be performed through image plane alignment according to a change in an object distance of the object. FIG. 1 illustrates that focusing is performed while the second lens group G21 is moved for an infinite object distance, an intermediate object distance, and an object distance of 80 cm. The first lens group G11 and the second lens group G21 are arranged from an object side O to an image side I. The first lens group G11 may have a negative refractive power, and the second lens group G21 may have a positive or negative refractive power.

Hereinafter, in describing a configuration of each lens, for example, the term 'image side' may refer to a side on which an image plane img on which an image is formed is present, and the term 'object side' may refer to a side on which the object is present. In addition, for example, the term "object-side surface" of a lens may refer to a surface of the lens on the side of the object with respect to an optical axis OA, on which light is incident with respect to an optical axis OA, and the term "image-side surface" may refer to a surface of the lens on the side of the image plane img with respect to the optical axis OA, from which the light exists with respect to the optical axis OA. The image plane img may be, for example, a surface of an imaging device or a surface of an image sensor. The image sensor may include, for example, a sensor such as a complementary metal-oxide-semiconductor (CMOS) image sensor or a charge-coupled device (CCD). The image sensor is not limited thereto and may be, for example, a device configured to convert an image of an object into an electrical image signal. With respect to object-side surfaces and image-side surfaces of respective lenses, reference numerals of S1, S2, S3, ..., Sn (n is a natural number) are respectively assigned sequentially from the object side O to the image side I along the optical axis OA.

The first lens group G11 may include at least one lens having a positive refractive power, and may be fixed to maintain a constant distance from the image plane during focusing. The first lens group G11 is fixed during focusing, and thus, the number and materials of lenses constituting the first lens group G11 may be variously selected. The first lens group G11 may include a first lens L11 having a positive refractive power, a second lens L21 having a negative refractive power, a third lens L31 having a positive refractive power, and a fourth lens L41 having a negative refractive power. The first lens L11 may include an object-side surface S1 that is convex toward the object side O. For example, the first lens L11 may be a biconvex lens. The second lens L21 may be a biconcave lens, and the third lens L31 may be a biconvex lens. The fourth lens L41 may be a biconcave lens. The first lens group G11 may include a stop ST that determines an F-number (Fno). For example, the stop ST may be provided on the object-side surface S1 of the first lens L11, so as to contribute to miniaturization of the lens assembly. The stop ST is for adjusting the diameter of a light flux, and may include, for example, an aperture stop, a variable stop, or a mask-type stop. Each of the first to fourth lenses L11, L21, L31, and l41 may be an aspherical lens.

The second lens group G21 may include a fifth lens L51 that is an aspherical lens. The fifth lens L51 may be a single-sided aspherical lens or a double-sided aspherical lens. The fifth lens L51 may be a meniscus lens that is convex toward the object side O, and the fifth lens L51 may have a positive refractive power. The second lens group G21 moves along the optical axis OA to perform focusing. The second lens group G21 may include a single lens such that the amount of movement during focusing may be reduced and the second lens group G21 may move quickly. In addition, camera shake correction may be performed by moving the second lens group G21 in a direction perpendicular to the optical axis OA.

According to various embodiments, at least one optical device OD may be provided between the fifth lens L51 and the image plane IMG. The optical device OD may include, for example, at least one of a low-pass filter, an infrared (IR)-cut filter, or a cover glass. For example, in a case where an IR-cut filter is provided as the optical device, the optical device may prevent infrared rays from being delivered to the image plane by transmitting visible rays and reflecting the infrared rays to the outside. However, it is also possible to configure the lens assembly without optical devices.

It is possible to capture a telephoto by using the lens assembly according to various embodiments. The lens assembly according to various embodiments may be mounted on mobile devices such as cellular phones or digital cameras. In addition, the lens assembly according to various embodiments may be applied to surveillance cameras, vehicle cameras, augmented reality (AR) glasses, virtual reality (VR) glasses, action cams, and the like.

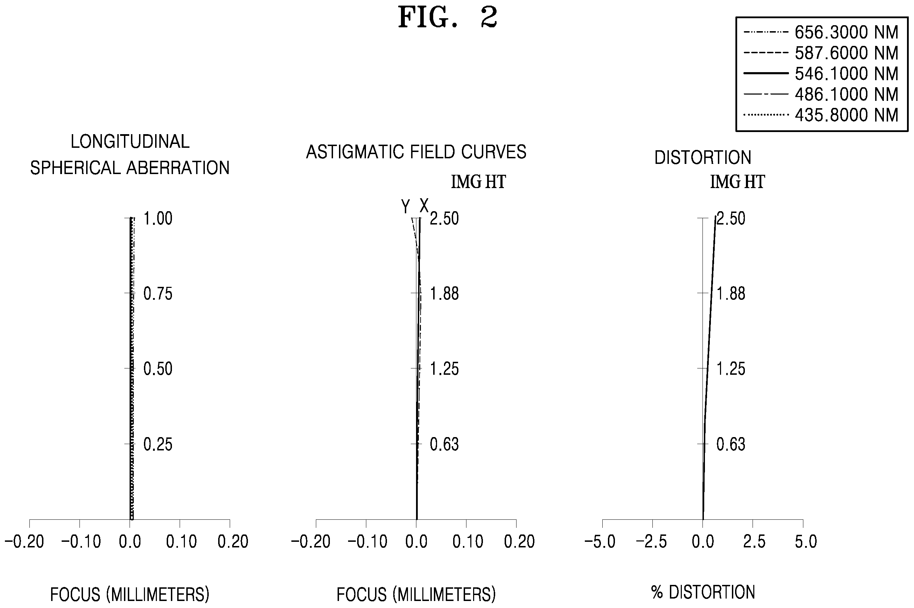

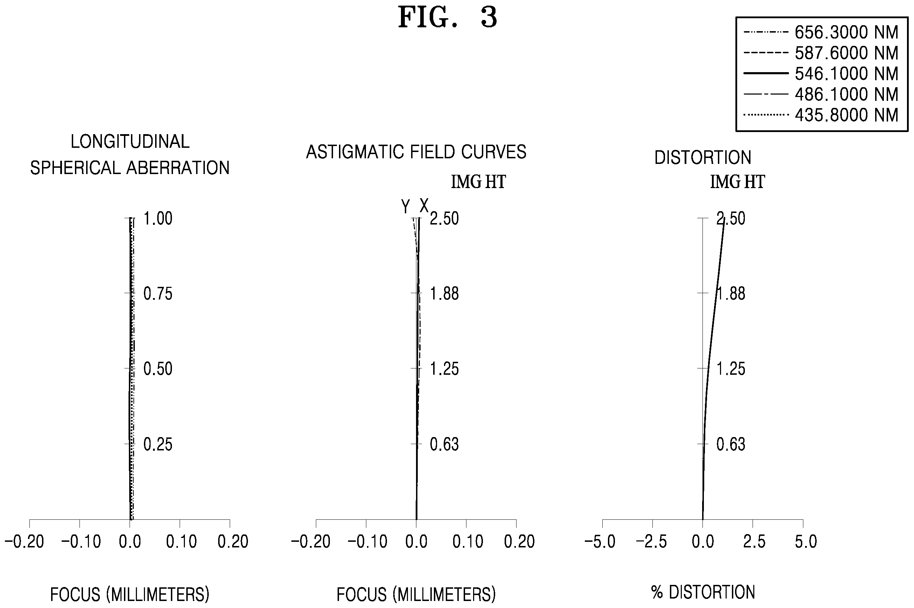

FIG. 2 shows longitudinal spherical aberration, astigmatic field curves, and distortion aberration (or distortion) of the lens assembly 100-1 for an infinite object distance, according to the first numerical embodiment. FIG. 3 shows longitudinal spherical aberration, astigmatic field curves, and distortion aberration (or distortion) of the lens assembly 100-1 for an object distance of 80 cm, according to the first numerical embodiment. For example, the longitudinal spherical aberration is for light with wavelengths of 656.3000 nanometers (NM), 587.6000 NM, 546.1000 NM, 486.1000 NM, and 435.8000 NM, and the astigmatic field curves include a tangential field curvature Y and a sagittal field curvature X. The astigmatic field curves are for light with a wavelength of 546.1000 NM, and the distortion aberration is for light with a wavelength of 546.1000 NM.

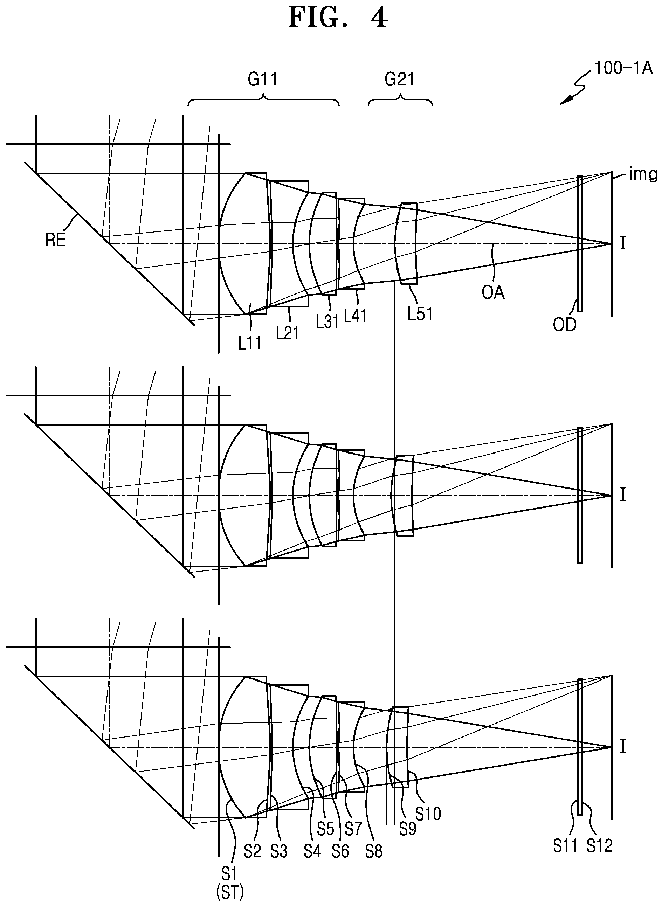

FIG. 4 illustrates an example in which the lens assembly 100-1 illustrated in FIG. 1 further includes a reflective member RE. In FIG. 4, descriptions of the elements with the same reference numerals as those in FIG. 1 will be omitted. The reflective member RE may be provided on the object side O of the first lens L11. The reflective member RE may include, for example, a reflective mirror or a prism. When a lens assembly 100-1A is applied to an electronic device, the degree of freedom in arrangement of the lens assembly 100-1A may be increased by the reflective member RE. The path of light coming from the object may be bent by the reflective member RE. In a case where the reflective member RE is provided as illustrated in FIG. 4, the object side O is determined in a state in which the bent optical axis OA is straightened. In the present embodiment, camera shake correction may be performed by moving the fifth lens L51 in a direction perpendicular to the optical axis OA. Alternatively, camera shake correction may be performed by tilting the reflective member RE.

The lens assembly according to various embodiments may satisfy the following equation. The equations below will be described with reference to the lens assembly 100-1 according to the first numerical embodiment illustrated in FIG. 1. However, the equations may be applied to other embodiments.

$$FOV < 15 \text{ (degree)} \quad \text{<Equation 1>}$$

Here, FOV denotes a half-field of view of the lens assembly 100-1.

The lens assembly 100-1 may have a half-field of view less than 15 degrees while satisfactorily correcting optical aberration. When the half-field of view is greater than or equal to 15 degrees, it may be difficult to correct astigmatism and curvature of field when focusing with the second lens group G21. When Equation 1 is satisfied, the lens assembly 100-1 may implement a compact telephoto lens.

$$0.5 < FL2/EFL < 1.1 \quad \text{<Equation 2>}$$

Here, FL2 denotes a focal length of the second lens group G21, and EFL denotes a total focal length of the lens assembly.

Equation (2) defines the ratio of the focal length of the second lens group G21 to the total focal length of the lens assembly, and when (FL2/EFL) is less than or equal to the lower limit of Equation (2), the sensitivity of the second lens group G21 performing focusing is high, making it difficult to display a clear image depending on the object distance. When (FL2/EFL) is greater than or equal to the upper limit of Equation (2), the sensitivity of the second lens group G21 is low, but the amount of movement of the second lens group G21 increases, making it difficult to quickly perform focusing. In order to mount a camera module on a mobile device or an electronic device, autofocusing speed and clear images are required, and thus, it is necessary to limit the focal length of the second lens group G21.

The lens assembly according to various embodiments may satisfy the following Equation.

$$0.8 < EFL/TTL < 1.2 \quad \text{<Equation 3>}$$

Here, EFL denotes a total focal length of the lens assembly, and TTL denotes a total distance of the lens assembly.

Equation (3) defines the ratio of the focal length of the lens assembly to the total distance of the lens assembly, and when Equation (3) is satisfied, a small module size that may be produced with respect to the focal length may be provided. The total distance TTL of the lens assembly refers to a distance from the object-side surface S1 of the first lens that is closest to the object side along the optical axis OA, to the image plane.

When (EFL/TTL) is less than or equal to the lower limit of Equation (3), the camera module size is large, and when (EFL/TTL) is greater than or equal to the upper limit of Equation (3), the sensitivity of the lens assembly is high, making it difficult to manufacture the lens assembly.

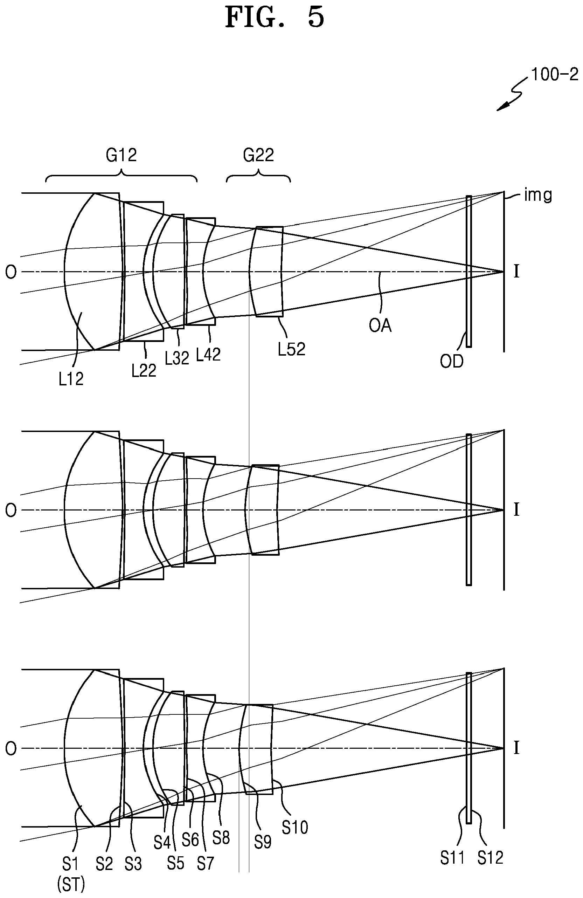

FIG. 5 illustrates a lens assembly 100-2 according to a second numerical embodiment from among various embodiments. The lens assembly 100-2 includes a first lens group G12 arranged from the object side O to the image side I, and a second lens group G22 that performs focusing. The first lens group G12 may include a first lens L12 having a positive refractive power, a second lens L22 having a negative refractive power, a third lens L32 having a positive refractive power, and a fourth lens L42 having a negative refractive power. The second lens group G22 may include a fifth lens L52 having a positive refractive power. Each lens of the lens assembly 100-2 of the second numerical embodiment is substantially the same as that of the lens assembly 100-1 of the first numerical embodiment described above, and thus, detailed descriptions thereof will be omitted.

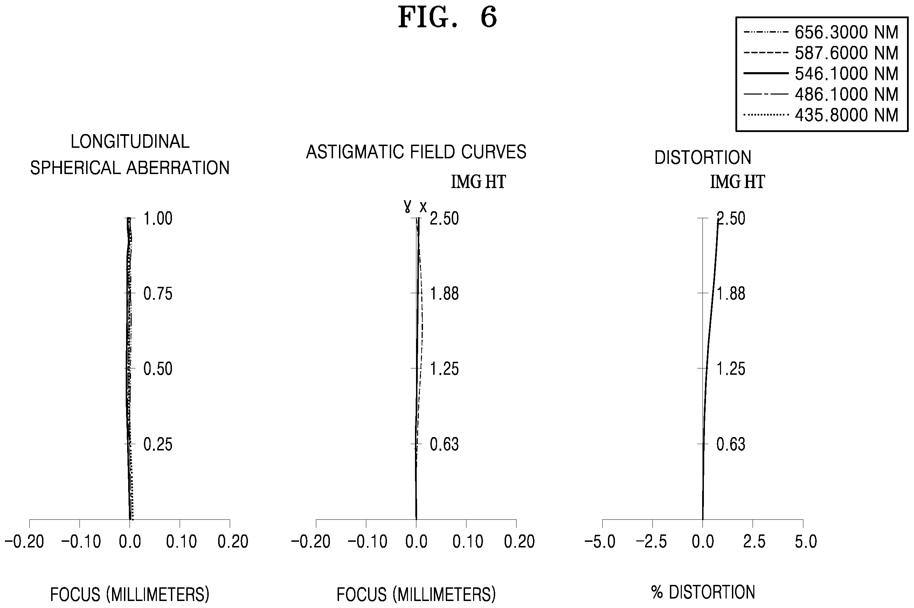

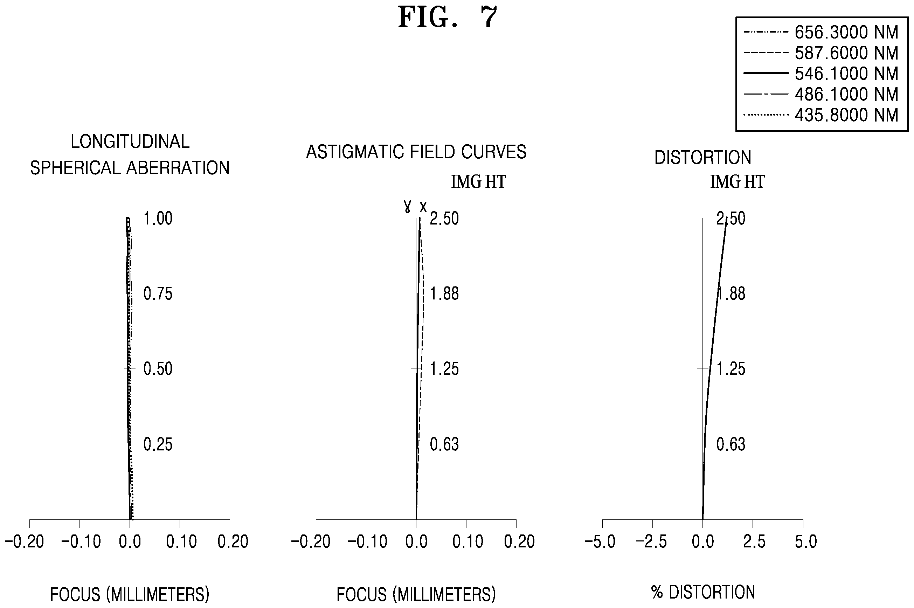

FIG. 6 shows longitudinal spherical aberration, astigmatic field curves, and distortion aberration (or distortion) of the lens assembly 100-2 for an infinite object distance, according to the second numerical embodiment. FIG. 7 shows longitudinal spherical aberration, astigmatic field curves, and distortion aberration (or distortion) of the lens assembly 100-2 for an object distance of 80 cm, according to the second numerical embodiment.

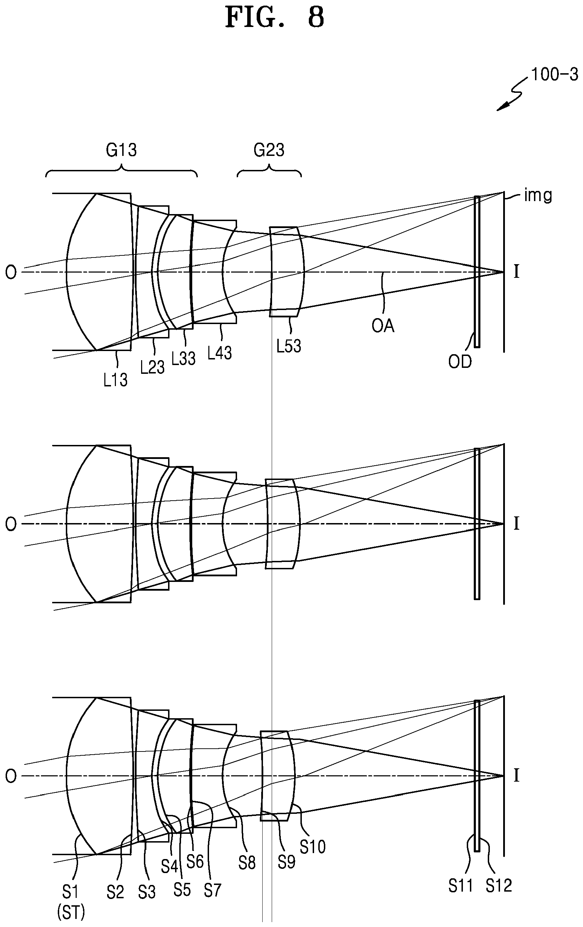

FIG. 8 illustrates a lens assembly 100-3 according to a third numerical embodiment from among various embodiments. The lens assembly 100-3 includes a first lens group G13 arranged from the object side O to the image side I, and a second lens group G23 that performs focusing. The first lens group G13 may include a first lens L13 having a positive refractive power, a second lens L23 having a negative refractive power, a third lens L33 having a positive refractive power, and a fourth lens L43 having a negative refractive power. The second lens group G23 may include a fifth lens L53 having a positive refractive power. A configuration of each lens of the lens assembly 100-3 of the third numerical embodiment, which is different from that of the lens assembly 100-1 of the first numerical embodiment, will be described. The second lens L23 may be a meniscus lens that is convex toward the object side O, the third lens L33 may be a meniscus lens that is convex toward the object side O, and the fourth lens L43 may be a meniscus lens that is convex toward the object side O. The fifth lens L53 may be a meniscus lens that is concave toward the object side O.

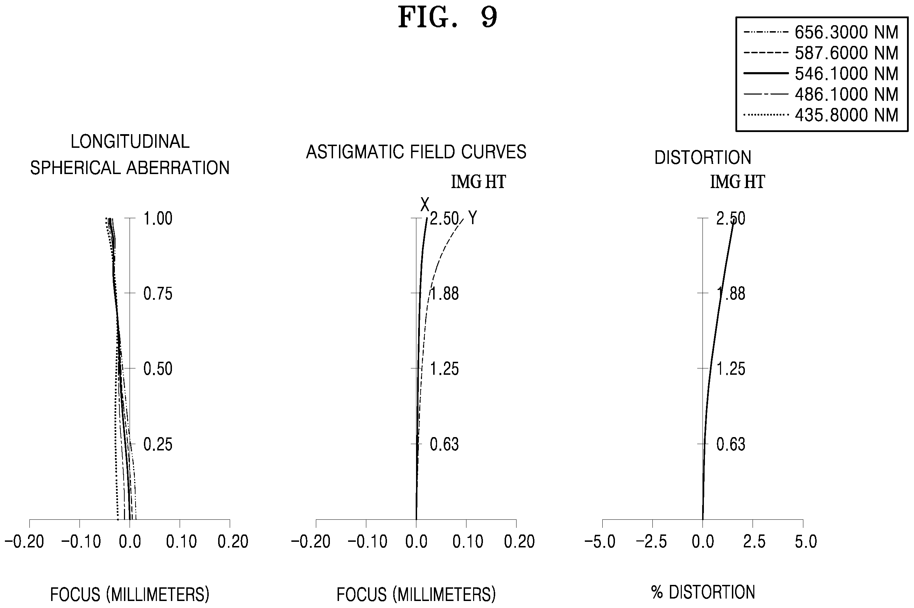

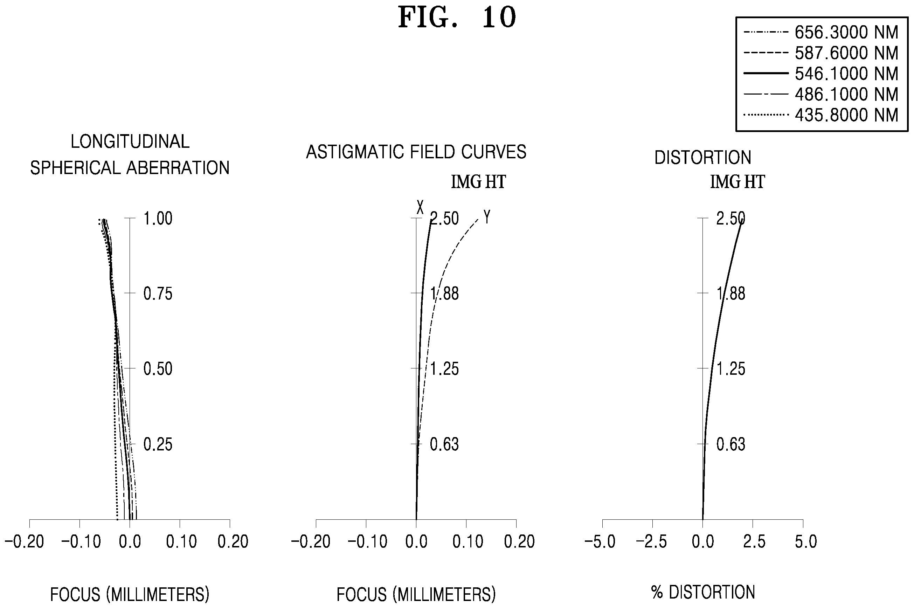

FIG. 9 shows longitudinal spherical aberration, astigmatic field curves, and distortion aberration (or distortion) of the lens assembly 100-3 for an infinite object distance, according to the second numerical embodiment. FIG. 10 shows longitudinal spherical aberration, astigmatic field curves, and distortion aberration (or distortion) of the lens assembly 100-3 for an object distance of 80 cm, according to the third numerical embodiment.

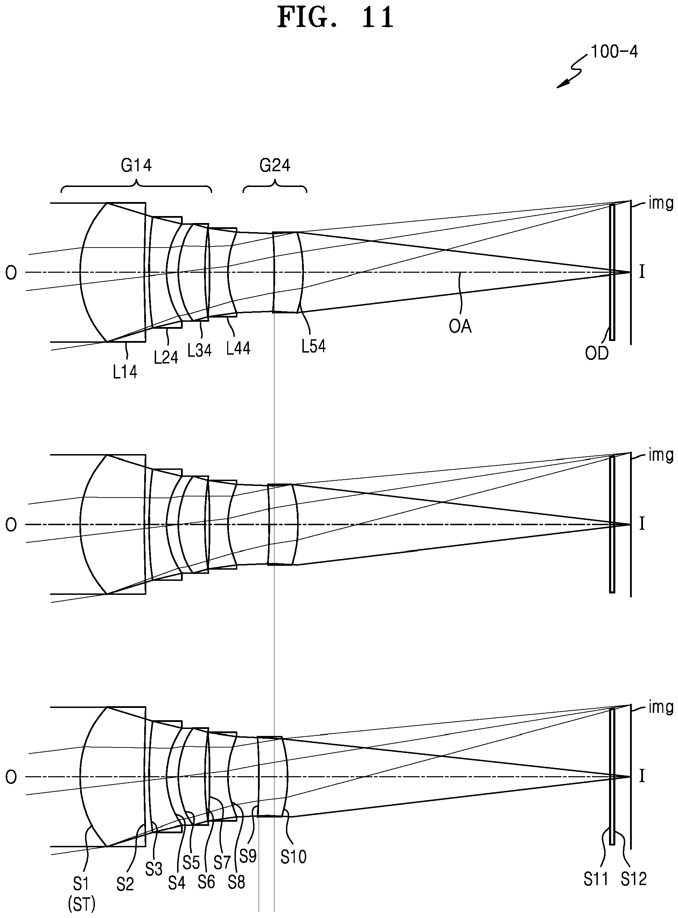

FIG. 11 illustrates a lens assembly 100-4 according to a fourth numerical embodiment from among various embodiments. The lens assembly 100-4 includes a first lens group G14 arranged from the object side O to the image side I, and a second lens group G24 that performs focusing. The first lens group G14 may include a first lens L14 having a positive refractive power, a second lens L24 having a negative refractive power, a third lens L34 having a positive refractive power, and a fourth lens L44 having a negative refractive power. The second lens group G24 may include a fifth lens L54 having a positive refractive power. The first lens L14 may be a meniscus lens that is convex toward the object side O, the second lens L24 may be a meniscus lens that is convex toward the object side O, the third lens L34 may be a meniscus lens that is convex toward the object side O, and the fourth lens L44 may be a meniscus lens that is convex toward the object side O. The fifth lens L53 may be a meniscus lens that is concave toward the object side O. The first lens L14 may be a spherical lens.

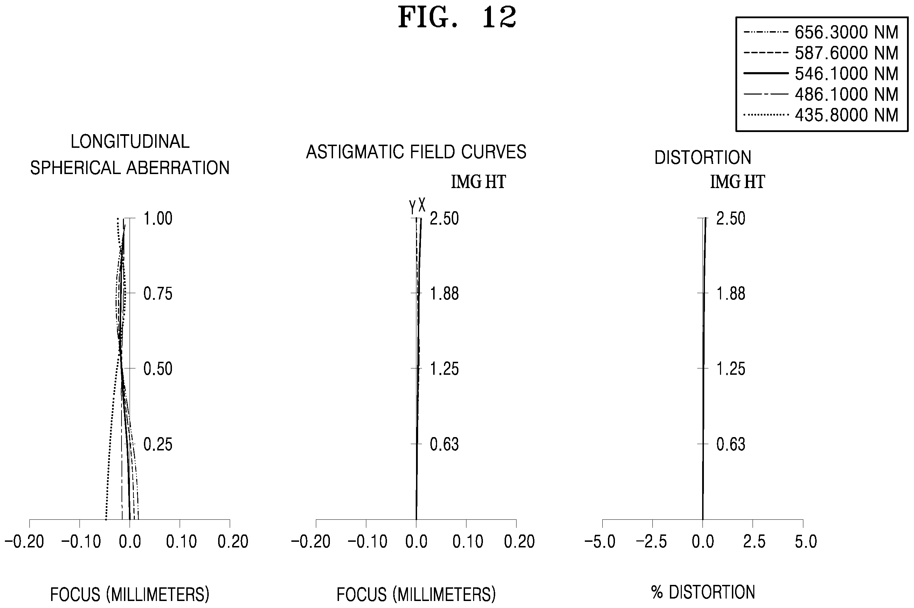

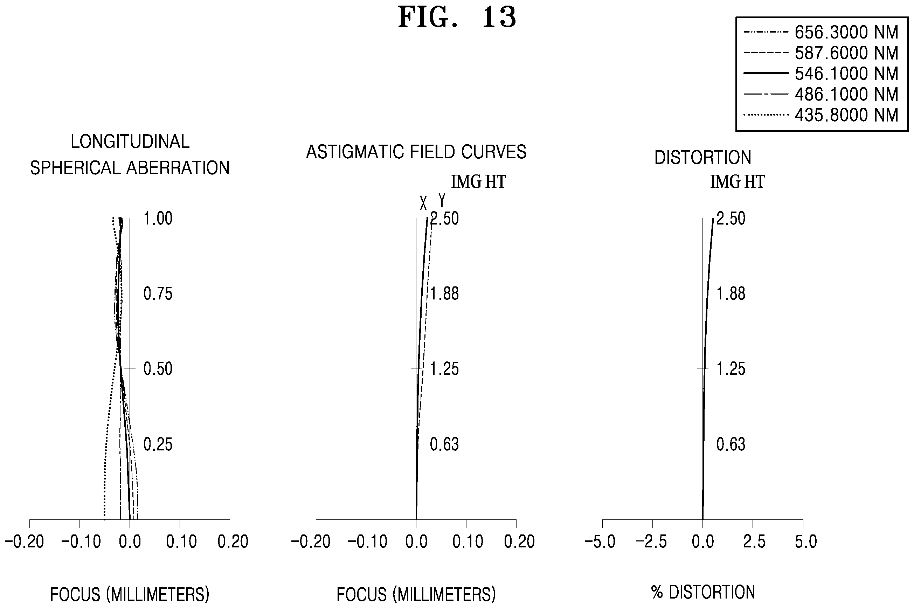

FIG. 12 shows longitudinal spherical aberration, astigmatic field curves, and distortion aberration (or distortion) of the lens assembly 100-4 for an infinite object distance, according to the fourth numerical embodiment. FIG. 13 shows longitudinal spherical aberration, astigmatic field curves, and distortion aberration (or distortion) of the lens assembly 100-4 for an object distance of 80 cm, according to the fourth numerical embodiment.

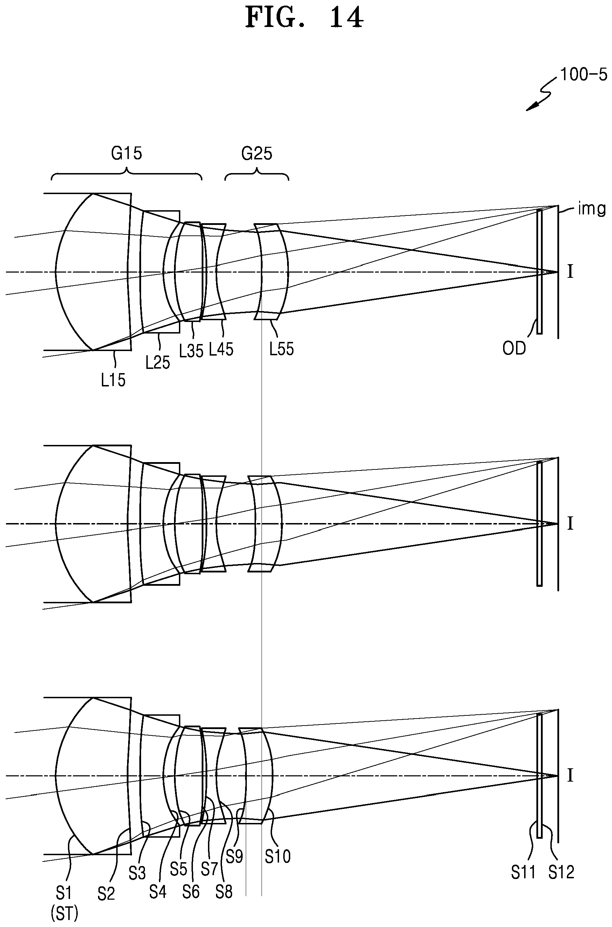

FIG. 14 illustrates a lens assembly 100-5 according to a fifth numerical embodiment from among various embodiments. The lens assembly 100-5 includes a first lens group G15 arranged from the object side O to the image side I, and a second lens group G25 that performs focusing. The first lens group G15 may include a first lens L15 having a positive refractive power, a second lens L25 having a negative refractive power, a third lens L35 having a positive refractive power, and a fourth lens L45 having a negative refractive power. The second lens group G25 may include a fifth lens L55 having a positive refractive power. The first lens L15 may be a meniscus lens that is convex toward the object side O, the second lens L25 may be a meniscus lens that is convex toward the object side O, the third lens L35 may be a biconvex lens, and the fourth lens L45 may be a biconcave lens. The fifth lens L55 may be a meniscus lens that is concave toward the object side O. The first lens L15 may be a spherical lens.

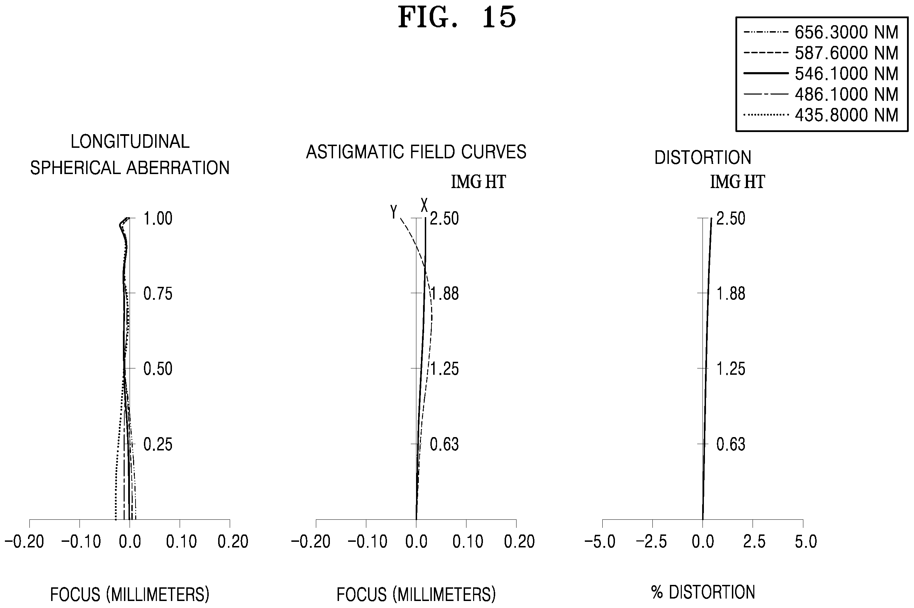

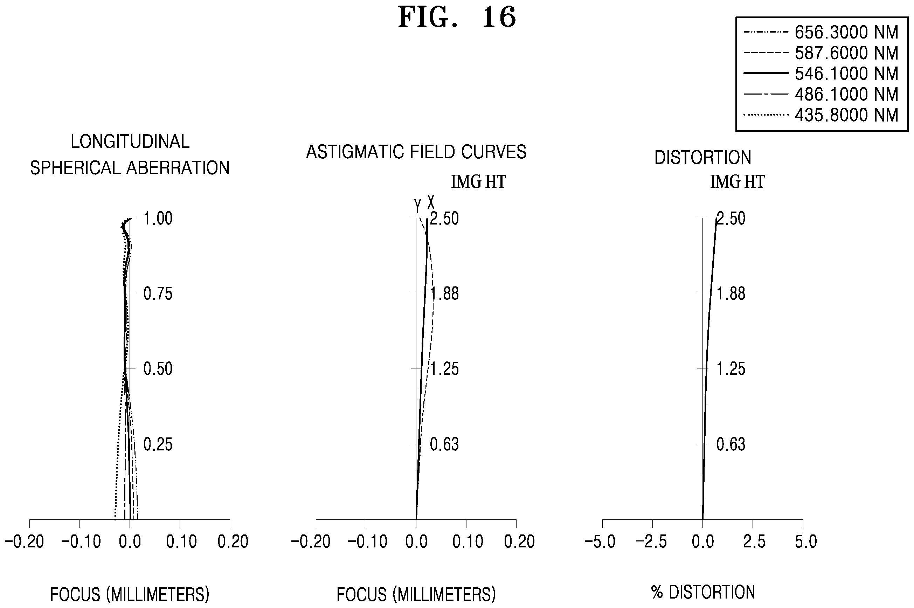

FIG. 15 shows longitudinal spherical aberration, astigmatic field curves, and distortion aberration (or distortion) of the lens assembly 100-5 for an infinite object distance, according to the fifth numerical embodiment. FIG. 16 shows longitudinal spherical aberration, astigmatic field curves, and distortion aberration (or distortion) of the lens assembly 100-5 for an object distance of 80 cm, according to the fifth numerical embodiment.

Meanwhile, the definition of an aspheric surface used in the lens assembly according to various embodiments is as follows.

When an optical axis direction is set to an x axis and a direction perpendicular to the optical axis direction is set to a Y axis, an aspherical shape may be represented by the following equation with the positive traveling direction of rays. Here, x denotes the distance in the optical axis direction from the vertex of the lens, y denotes the distance in the direction perpendicular to the optical axis, K denotes a conic constant, A, B, C, D, ... denote aspherical coefficients, and c denotes a reciprocal (1/R) of the radius of curvature at the vertex of the lens.

$$x = \frac{cy^2}{1+\sqrt{1-(K+1)c^2y^2}} + Ay^4 + By^6 + Cy^8 + Dy^{10} + \dots$$

<Equation 7>

In the present disclosure, the lens assembly may be implemented through numerical embodiments according to various designs as follows.

In each numerical embodiment, lens surface numbers S1, S2, S3, ..., Sn (n is a natural number) are assigned in a line sequentially from the object side O to the image side I. EFL denotes a total focal length of the lens assembly, FL denotes a focal length of each lens included in the lens assembly, Fno denotes an F-number, FOV denotes a half-field of view, R denotes a radius of curvature, Dn denotes a thickness of the lens or an air gap between the lenses, nd denotes a refractive index, and vd denotes an Abbe number. EFL, FL, Dn, and R are in mm, and FOV is in degrees. ST denotes a stop, and obj denotes an object. * denotes an aspheric surface.

<First numerical embodiment>

FIG. 1 illustrates the lens assembly 100-1 according to the first numerical embodiment from among various embodiments, and Table 1 shows, for example, design data of the first numerical embodiment.

EFL : 14.2mm, Fno : 3.0,

[Table 1]

| Lens surface | R | Dn | FL (e-line) | nd | vd |
|---|---|---|---|---|---|
| obj | infinity | | | | |
| S1 (ST)* | 3.626 | 1.794 | 5.3357 | 1.5441 | 56.09 |
| S2* | -12.282 | 0.057 | | | |
| S3* | -57.77 | 0.762 | -4.359 | 1.63914 | 23.51 |
| S4* | 2.973 | 0.569 | | | |
| S5* | 3.488 | 0.989 | 4.7457 | 1.67073 | 19.23 |
| S6* | -37.399 | 0.05 | | | |
| S7* | 31.098 | 0.501 | -3.928 | 1.61444 | 25.94 |
| S8* | 2.245 | 1.49191 | | | |
| S9 | 4.932 | 0.701 | 12.4549 | 1.5348 | 55.71 |
| S10* | 17.835 | 5.72757 | | | |
| S11 | infinity | 0.11 | | 1.5168 | 64.2 |
| S12 | infinity | | | | |
| img | infinity | | | | |

Table 2 shows aspherical coefficients in the first numerical embodiment.

[Table 2]

| Lens surface | K | A | B | C | D | E | F | G | H | J |
|---|---|---|---|---|---|---|---|---|---|---|
| S1 | 0.47458 | 0.00125 2 | 9.063E-05 | 1.84032 E-05 | 2.93266 E-06 | 2.65733 E-07 | 5.42486 E-08 | 2.791E-09 | 1.95394 E-09 | 7.25088 E-11 |
| S2 | - 68.7297 | 0.00304 1 | -9.59E-05 | 1.88343 E-05 | 3.61159 E-06 | 1.33877 E-07 | 2.01989 E-08 | 1.10291 E-08 | 4.81064 E-09 | 8.06961 E-10 |
| S3 | 99.8205 2 | - 0.00178 | 0.00075 42 | 1.00633 E-05 | 4.36404 E-06 | 1.74566 E-06 | 1.03242 E-07 | 7.29289 E-08 | 2.23691 E-10 | 1.22697 E-09 |
| S4 | - 0.19329 | - 0.01299 | 0.00155 82 | 0.00044 5695 | 6.30421 E-06 | 3.13971 E-07 | 6.41448 E-07 | 2.70014 E-06 | 1.32333 E-06 | 2.00824 E-07 |
| S5 | 0 | - 0.00781 | 0.00017 3 | 0.00074 2636 | 0 | 0 | 0 | | | |
| S6 | -33.647 | - 0.00615 | 0.00162 94 | 0.00095 8076 | 0.00032 7311 | 2.86184 E-05 | 4.41603 E-06 | 7.67686 E-06 | 2.97297 E-06 | 1.78161 E-07 |
| S7 | 51.3894 2 | - 0.01613 | 0.00234 44 | 0.00010 824 | 9.32081 E-05 | 9.73808 E-05 | 1.54027 E-05 | 2.81665 E-06 | 9.55488 E-07 | 2.84264 E-08 |
| S8 | - 0.32264 | - 0.01791 | 0.00023 19 | 0.00122 6898 | 0.00133 5659 | 0.00056 5622 | 8.4521E -05 | | | |
| S10 | 0 | 0.00041 9 | 9.081E-05 | 9.39541 E-05 | 1.79884 E-05 | 2.93695 E-06 | 8.07129 E-17 | | | |

<Second numerical embodiment>

FIG. 5 illustrates the lens assembly 100-2 according to the second numerical embodiment from among various embodiments, and Table 3 shows, for example, design data of the second numerical embodiment.

EFL : 14.2mm, FNO : 2.9

[Table 3]

| Lens surface | R | Dn | FL(e-line) | nd | vd |
|---|---|---|---|---|---|
| obj | infinity | D0 | | | |
| S1(ST) * | 3.489 | 1.871 | 5.3971 | 1.5168 | 64.2 |
| S2* | -11.569 | 0.05 | | | |
| S3* | -59.717 | 0.604 | -3.8097 | 1.63914 | 23.51 |
| S4* | 2.575 | 0.307 | | | |
| S5* | 2.963 | 0.991 | 4.0014 | 1.67073 | 19.23 |
| S6* | -28.215 | 0.066 | | | |
| S7* | 37.836 | 0.49 | -3.887 | 1.61444 | 25.94 |
| S8* | 2.254 | 1.48974 | | | |
| S9 | 5.426 | 0.998 | 12.6474 | 1.5348 | 55.71 |
| S10* | 25.242 | 5.72757 | | | |
| S11 | infinity | 0.11 | | 1.5168 | 64.2 |
| S12 | infinity | | | | |
| img | infinity | | | | |

Table 4 shows aspherical coefficients in the second numerical embodiment.

[Table 4]

| Lens surface | K | A | B | C | D | E | F | G | H | J |
|---|---|---|---|---|---|---|---|---|---|---|
| S1 | 0.46327 | 0.00129 6 | 9.861E-05 | 1.85449 E-05 | 2.99519 E-06 | 2.74783 E-07 | 5.35905 E-08 | 2.79375 E-09 | 1.96189 E-09 | 6.56213 E-11 |
| S2 | - 69.2181 | 0.00301 3 | -9.65E-05 | 1.80233 E-05 | 3.39031 E-06 | 1.50088 E-07 | 2.42024 E-08 | 1.07513 E-08 | 4.8973E -09 | 7.46044 E-10 |
| S3 | -1 | - 0.00177 | 0.0007546 | 1.04396 E-05 | 4.33258 E-06 | 1.70155 E-06 | 1.17243 E-07 | 7.57176 E-08 | 1.30135 E-10 | 1.21439 E-09 |
| S4 | 0.19707 | 0.01302 | 0.00153 98 | 0.00044 7323 | 5.55816 E-06 | 7.64534 E-07 | 1.05541 E-06 | 2.70014 E-06 | 1.32333 E-06 | 2.00824 E-07 |
| S5 | 0 | - 0.00784 | 0.00016 7 | 0.00073 9793 | 0 | 0 | 0 | | | |
| S6 | - 43.8652 | - 0.00611 | 0.00162 34 | 0.00095 4929 | 0.00033 2534 | 2.69717 E-05 | 4.17392 E-06 | 7.67686 E-06 | 2.97297 E-06 | 1.78161 E-07 |
| S7 | 44.9320 2 | - 0.01616 | 0.00236 79 | 9.79169 E-05 | 9.92447 E-05 | 9.58854 E-05 | 1.54027 E-05 | 2.81665 E-06 | 9.55488 E-07 | 2.84264 E-08 |
| S8 | - 0.30933 | - 0.01764 | 0.00020 13 | 0.00119 2474 | 0.00137 4918 | 0.00056 5622 | 8.4521 E-05 | | | |
| S10 | 0 | 0.00040 1 | -8.05E-05 | 1.53297 E-05 | 5.94441 E-06 | 2.93695 E-06 | 8.69718 E-17 | | | |

<Third numerical embodiment>

FIG. 8 illustrates the lens assembly 100-3 according to the third numerical embodiment from among various embodiments, and Table 5 shows, for example, design data of the third numerical embodiment.

EFL : 30.9mm, FNO : 4.4

[Table 5]

| Lens surface | R | Dn | FL(e-line) | nd | vd |
|---|---|---|---|---|---|
| obj | infinity | | | | |
| S1(ST) | 3.669 | 2.052 | 7.0795 | 1.497 | 81.61 |
| S2 | -75.357 | 0.086 | | | |
| S3* | 20.314 | 0.5 | -5.7382 | 1.63914 | 23.51 |
| S4* | 3.103 | 0.189 | | | |
| S5* | 2.973 | 1.008 | 5.573 | 1.67073 | 19.23 |
| S6* | 11.966 | 0.05 | | | |
| S7* | 11.992 | 0.969 | -4.6641 | 1.61444 | 25.94 |
| S8* | 2.258 | 1.53638 | | | |
| S9* | -52.647 | 1 | 11.3411 | 1.5348 | 55.71 |
| S10* | -5.496 | 5.3383 | | | |
| S11 | infinity | 0.11 | | 1.5168 | 64.2 |
| S12 | infinity | | | | |
| img | infinity | | | | |

Table 6 shows aspherical coefficients in the third numerical embodiment.

[Table 6]

| Lens surface | K | A | B | C | D | E | F | G | H | J |
|---|---|---|---|---|---|---|---|---|---|---|
| S3 | -1 | 0.00245 3 | 0.00069 3759 | 2.01371 E-05 | 5.29961E-06 | 1.8611 E-06 | 6.47045 E-08 | 6.25301 E-08 | 1.4135E -09 | 1.03177 E-09 |
| S4 | -0.01503 | 0.01116 8 | 0.00158 43 | 0.00047 3992 | 2.20811 E-05 | 1.97437 E-07 | 1.22029 E-06 | 2.77793 E-06 | 1.32357 E-06 | 2.00824 E-07 |
| S5 | -0.00911 | 0.00898 3 | 8.45009 E-05 | 0.00080 3011 | 2.58864 E-06 | 9.5133 E-07 | 4.52759 E-07 | 8.31813 E-08 | 2.37485 E-10 | 2.74902 E-19 |
| S6 | -1 | 0.00572 2 | 0.00124 1691 | 0.00086 5872 | 0.00033 9861 | 2.16033 E-05 | 3.78371 E-06 | 7.6795 E-06 | 2.97297 E-06 | 1.78161 E-07 |
| S7 | -1 | -0.01727 | 0.00236 9266 | 0.00013 0776 | 8.38842 E-05 | 9.19183 E-05 | 1.53562 E-05 | 2.81463 E-06 | 9.55488 E-07 | 2.84264 E-08 |
| S8 | -0.135 | 0.01479 8 | 0.00025 6457 | 0.00079 8056 | 0.00153 5038 | 0.00056 5539 | 8.4521E -05 | 2.58417 E-19 | 2.933E-21 | 1.74351 E-21 |
| S9 | -1 | 0.00560 5 | 0.00080 258 | 0.00052 6342 | 0.00016 0103 | 1.45648 E-15 | 1.61321 E-17 | 4.68236 E-19 | 8.07788 E-21 | 1.06005 E-21 |
| S10 | 5.29893 | 0.00145 9 | 0.00058 4058 | 4.48176 E-06 | 1.76961 E-05 | 2.93695 E-06 | 1.86406 E-16 | 1.64211 E-19 | 5.81461 E-21 | 1.87997 E-21 |

<Fourth numerical embodiment>

FIG. 11 illustrates the lens assembly 100-4 according to the fourth numerical embodiment from among various embodiments, and Table 7 shows, for example, design data of the fourth numerical embodiment.

EFL : 30.9mm, FNO : 4.4

[Table 7]

| Lens surface | R | Dn | FL(e-line) | nd | vd |
|---|---|---|---|---|---|
| obj | infinity | | | | |
| S1(ST) | 3.756 | 2.205 | 8.2217 | 1.497 | 81.61 |
| S2 | 36.22 | 0.165 | | | |
| S3* | 13.599 | 0.598 | -5.6136 | 1.63914 | 23.51 |
| S4* | 2.812 | 0.428 | | | |
| S5* | 3.028 | 0.923 | 5.7285 | 1.68099 | 18.11 |
| S6* | 11.345 | 0.154 | | | |
| S7* | 50.676 | 0.637 | -5.0685 | 1.61444 | 25.94 |
| S8* | 2.945 | 1.60969 | | | |
| S9* | -36.338 | 1 | 12.6807 | 1.5348 | 55.71 |
| S10* | -5.791 | 10.66522 | | | |
| S11 | infinity | 0.11 | | 1.5168 | 64.2 |
| S12 | infinity | | | | |
| img | infinity | | | | |

Table 8 shows aspherical coefficients in the fourth numerical embodiment.

[Table 8]

| Lens surface | K | A | B | C | D | E | F | G | H | J |
|---|---|---|---|---|---|---|---|---|---|---|
| S3 | -1 | 0.00257 1713 | 0.00073 209 | 1.35338 E-05 | 2.58742 E-06 | 1.92691 E-06 | 3.76406 E-08 | 6.3063 E-08 | 5.29417 E-10 | 9.91378 E-10 |
| S4 | 0.0433 | 0.01058 6711 | 0.00153 1184 | 0.00047 4556 | 2.38603 E-05 | 2.18356 E-06 | 1.43839 E-06 | 2.77339 E-06 | 1.32357 E-06 | 2.00824 E-07 |
| S5 | 0.02104 | 0.00892 2878 | 0.00023 9286 | 0.00080 1362 | 8.65816 E-06 | 2.95309 E-06 | 1.80588 E-06 | 8.31813 E-08 | 2.37485 E-10 | 7.79119 E-19 |
| S6 | -1 | 0.00626 2118 | 0.00106 424 | 0.00088 5962 | 0.00033 1233 | 2.71328 E-05 | 3.78371 E-06 | 7.6795 E-06 | 2.97297 E-06 | 1.78161 E-07 |
| S7 | -1 | 0.01727 4853 | 0.00237 3681 | 0.00014 3541 | 0.00012 5468 | 9.03138 E-05 | 1.53562 E-05 | 2.81463 E-06 | 9.55488 E-07 | 2.84264 E-08 |
| S8 | -0.13574 | 0.01494 1195 | 0.00064 3564 | 0.00058 6876 | 0.00128 083 | 0.00056 5539 | 8.4521 E-05 | 2.43706 E-19 | 2.01662 E-20 | 4.62052 E-22 |
| S9 | -1 | 0.00690 0648 | 0.00056 208 | 0.00037 7272 | 4.63892 E-05 | 5.46855 E-15 | 1.25801 E-16 | 2.28694 E-18 | 6.65413 E-21 | 1.82065 E-22 |
| S10 | 5.18787 | 0.00261 6296 | 0.00030 8155 | 4.11997 E-05 | 3.4923E -05 | 2.93695 E-06 | 8.46337 E-16 | 1.81755 E-17 | 4.53174 E-19 | 6.30261 E-21 |

<Fifth numerical embodiment>

FIG. 14 illustrates the lens assembly 100-5 according to the fifth numerical embodiment from among various embodiments, and Table 9 shows, for example, design data of the fifth numerical embodiment.

EFL : 20.0mm, FNO : 3.3

[Table 9]

| Lens surface | R | Dn | FL(e-line) | nd | vd |
|---|---|---|---|---|---|
| obj | infinity | | | | |
| S1(ST) | 3.919 | 2.689 | 8.7935 | 1.497 | 81.61 |
| S2 | 28.585 | 0.45 | | | |
| S3* | 17.044 | 0.869 | -6.5334 | 1.63914 | 23.51 |
| S4* | 3.313 | 0.414 | | | |
| S5* | 4.542 | 1.06 | 6.158 | 1.68099 | 18.11 |
| S6* | -59.277 | 0.131 | | | |
| S7* | -21.697 | 0.377 | -5.2033 | 1.61444 | 25.94 |
| S8* | 3.815 | 1.66216 | | | |
| S9* | -15.41 | 1 | 14.696 | 1.5348 | 55.71 |
| S10* | -5.338 | 9.35709 | | | |
| S11 | infinity | 0.11 | | 1.5168 | 64.2 |
| S12 | infinity | | | | |
| img | infinity | | | | |

Table 10 shows aspherical coefficients in the fifth numerical embodiment.

[Table 10]

| Lens surface | K | A | B | C | D | E | F | G | H | J |
|---|---|---|---|---|---|---|---|---|---|---|
| S3 | -1 | 0.00314 7 | 0.00067 832 | 1.69105 E-05 | 2.35627 E-06 | 2.11357 E-06 | 3.90375 E-08 | 6.37269 E-08 | 9.02678 E-10 | 9.5242E -10 |
| S4 | 0.24789 | 0.00849 7 | 0.00187 3449 | 0.00050 6697 | 3.53118 E-05 | 1.86802 E-06 | 1.4807 E-06 | 2.71726 E-06 | 1.35529 E-06 | 2.00824 E-07 |
| S5 | 0.10653 | 0.00862 8 | 0.00037 2704 | 0.00079 635 | 1.71315 E-05 | 2.86782 E-06 | 1.81909 E-06 | 1.718E-07 | 2.37485 E-10 | 6.84205 E-19 |
| S6 | -1 | 0.00848 8 | 0.00044 6019 | 0.00081 3357 | 0.00032 8923 | 2.5118 E-05 | 3.41565 E-06 | 7.6795 E-06 | 2.97297 E-06 | 1.78161 E-07 |
| S7 | -1 | 0.01708 5 | 0.00243 4462 | 0.00014 062 | 0.00012 549 | 9.56459 E-05 | 1.52877 E-05 | 2.98104 E-06 | 9.55488 E-07 | 2.84264 E-08 |
| S8 | 0.03042 | 0.01444 2 | 0.00097 9002 | 0.00041 7682 | 0.00112 6504 | 0.00056 5539 | 8.4521 E-05 | 9.9113 E-20 | 1.48336 E-20 | 6.81519 E-22 |
| S9 | -1 | 0.00831 2 | 0.00042 2956 | 0.00022 8085 | 3.08349 E-05 | 5.61942 E-15 | 1.31373 E-16 | 2.2904 E-18 | 5.82448 E-21 | 1.42617 E-22 |
| S10 | 4.78922 | 0.00232 4 | 0.00017 3517 | 0.00014 8077 | 1.11939 E-05 | 4.56888 E-06 | 7.36022 E-16 | 1.74756 E-17 | 4.51141 E-19 | 6.22866 E-21 |

Table 11 shows values for Equations 1 to 3 in the lens assembly according to the first to fifth numerical embodiments.

[Table 11]

|  | Equation 1 | Equation 2 | Equation 3 |
|---|---|---|---|
|  | FOV | FL2/EFL | EFL/TTL |
| Embodiment 1 | 9.92 | 0.88 | 1.03 |
| Embodiment 2 | 9.91 | 0.89 | 1.03 |
| Embodiment 3 | 10.26 | 0.83 | 1.00 |
| Embodiment 4 | 7.13 | 0.63 | 1.05 |
| Embodiment 5 | 7.11 | 0.73 | 1.07 |

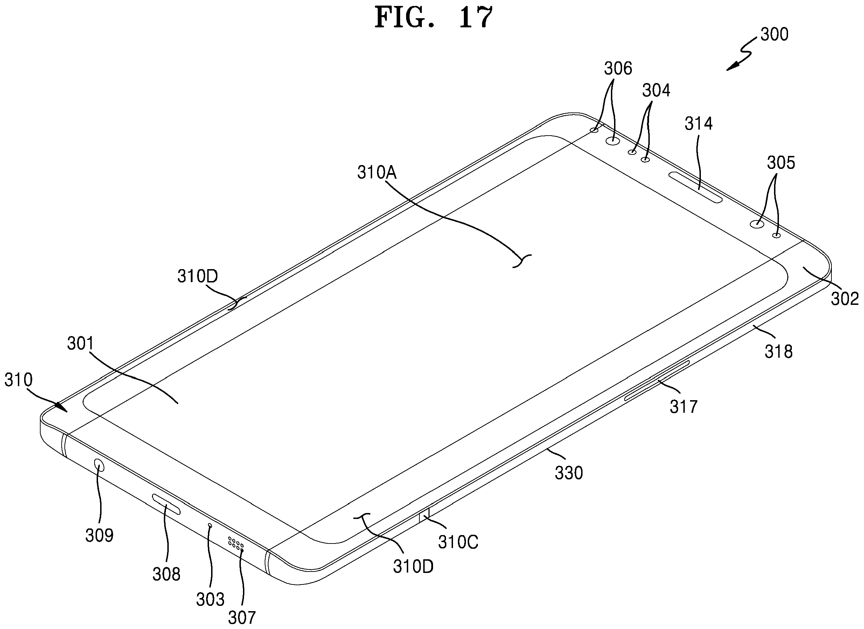

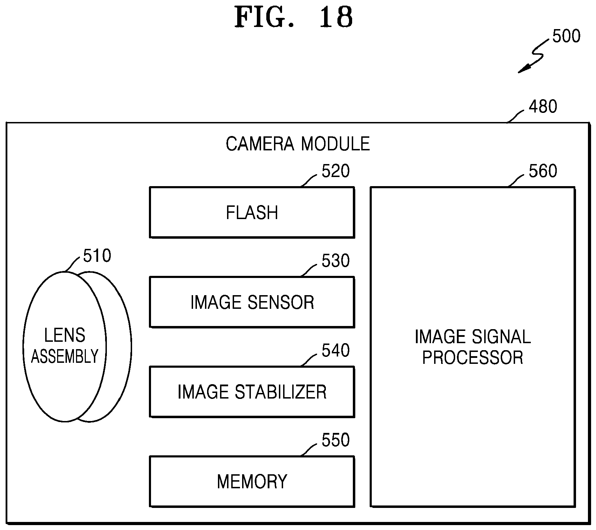

The lens assembly according to various embodiments may be applied to, for example, an electronic device employing an image sensor. The lens assembly according to an example embodiment may be applied to various electronic devices, such as digital cameras, interchangeable-lens cameras, video cameras, cellular phone cameras, compact mobile device cameras, VR, AR, drones, or unmanned aerial vehicles. FIGS. 17 and 18 illustrate examples of electronic devices equipped with a lens assembly, according to an example embodiment. FIGS. 17 and 18 illustrate examples in which electronic devices are applied to mobile phones, but the present disclosure is not limited thereto. FIG. 17 illustrates the front surface of the mobile phone, and FIG. 18 illustrates the back surface of the mobile phone.

An electronic device 300 according to an embodiment may include a housing 310 including a first surface (or front surface) 310A, a second surface (or back surface) 310B, and a side surface 310C surrounding a space between the first surface 310A and the second surface 310B. In another embodiment (not shown), the housing 310 may refer to a structure that forms some of the first surface 310A, the second surface 310B, and the side surface 310C. According to an embodiment, the first surface 310A may be formed by a front plate 302 (e.g., a glass plate including various coating layers, or a polymer plate), at least a portion of which is substantially transparent. In another embodiment, the front plate 302 may be coupled to the housing 310 to form an internal space together with the housing 310. In various embodiments, the term 'internal space' may refer to an internal space of the housing 310 accommodating at least a portion of a display 301.

According to various embodiments, the second surface 310B may be formed by a back plate 311 that is substantially opaque. The back plate 311 may be formed by, for example, coated or tinted glass, ceramic, polymer, metal (e.g., aluminum, stainless steel (STS), or magnesium), or a combination of at least two of these materials. The side surface 310C may be coupled to the front plate 302 and the back plate 311, and may be formed by a side bezel structure (or "side member") 318 including metal and/or polymer. In an embodiment of the disclosure, the back plate 311 and the side bezel structure 318 may be integrally formed with each other, and may include the same material (e.g., a metal material such as aluminum).

In the illustrated embodiment, the front plate 302 may include, at both ends of a long edge thereof, two first regions 310D that bend from the first surface 310A toward the back plate 311 to seamlessly extend. The back plate 311 may include, at both ends of a long edge thereof, two second regions 310E that bend from the second surface 310B toward the front plate 302 to seamlessly extend. In various embodiments, the front plate 302 (or the back plate 311) may include only one of the first regions 310D (or the second regions 310E). In another embodiment, a portion of the first regions 310D or the second regions 310E may not be included. In the above embodiments, when viewed from a side of the electronic device, the side bezel structure 318 may have a first thickness (or width) on a side not including the first regions 310D or the second regions 310E (e.g., a side on which a connector hole 308 is formed), and may have a second thickness less than the first thickness on a side including the first regions 310D or the second regions 310E (e.g., a side on which a key input device 317 is arranged).

According to an embodiment, the electronic device 300 may includes at least one of the display 301, audio modules 303, 307, and 314, sensor modules 304, 316, and 319, camera modules 305, 312a, and 312b, the key input device 317, a light-emitting device 306, and connector holes 308 and 309. In various embodiments, the electronic device 300 may omit at least one of the components (e.g., the key input device 317 or the light-emitting device 306), or may additionally include other components.

The display 301 may be exposed through, for example, a large portion of the front plate 302. In various embodiments, at least a portion of the display 301 may be exposed through the front plate 302 forming the first surface 310A and the first regions 310D of the side surface 310C. In various embodiments, an edge of the display 301 may have substantially the same shape as the adjacent outer shape of the front plate 302. In another embodiment (not shown), in order to expand the area through which the display 301 is exposed, the distance between the periphery of the display 301 and the periphery of the front plate 302 may be substantially uniform.

In another embodiment (not shown), a recess or an opening may be formed in a screen display region (e.g., an active region) of the display 301 or a portion of a region (e.g., an inactive region) outside the screen display region, and at least one of the audio module 314, the sensor module 304, the camera module 305, and the light-emitting device 306 may be aligned with the recess or opening. Alternatively, at least one of the audio module 314, the sensor module 304, the camera module 305, a fingerprint sensor 316, and the light-emitting device 306 may be included at the back surface of the screen display region of the display 301. Alternatively, the display 301 may be coupled to or arranged adjacent to a touch sensing circuit, a pressure sensor capable of measuring the strength (pressure) of a touch, and/or a digitizer for detecting a magnetic field-type stylus pen. In various embodiments, at least a portion of the sensor module 304 and 319 and/or at least a portion of the key input device 317 may be arranged in the first regions 310D and/or the second regions 310E.

The audio module 303, 307, and 314 may include a microphone hole 303 and a speaker hole 307 and 314. In the microphone hole 303, a microphone for obtaining an external sound may be arranged, and in various embodiments, a plurality of microphones may be arranged to detect the direction of a sound. The speaker holes 307 and 314 may include an external speaker hole 307 and a call receiver hole 314. In various embodiments, the speaker holes 307 and 314 and the microphone hole 303 may be implemented as a single hole, or a speaker may be included without the speaker holes 307 and 314 (e.g., a piezo speaker).

The sensor modules 304, 316, and 319 may generate an electrical signal or a data value corresponding to an internal operation state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor) arranged on the first surface 310A of the housing 310, and/or a third sensor module 319 (e.g., a heart rate monitor (HRM) sensor) and/or a fourth sensor module 316 (e.g., a fingerprint sensor) arranged on the second surface 310B of the housing 310. The fingerprint sensor may be arranged on the second surface 310B as well as the first surface 310A (e.g., the display 301) of the housing 310. The electronic device 300 may further include a sensor module (not shown), for example, at least one of a gesture sensor, a gyro sensor, a barometric sensor, a magnetic sensor, an acceleration sensor, a grip sensor, a color sensor, an IR sensor, a biometric sensor, a temperature sensor, a humidity sensor, or an illuminance sensor.

The camera modules 305, 312a, and 312b may include a first camera module 305 arranged on the first surface 310A of the electronic device 300, and a second camera module 312a, a third camera module 312b, and/or a flash 313 arranged on the second surface 310B. The camera modules 305, 312a, and 312b may include one or more lenses, an image sensor, and/or an image signal processor. For example, the camera modules 305, 312a, and 312b may include the lens assembly according to various embodiments described above with reference to FIGS. 1 to 16. The flash 313 may include, for example, a light-emitting diode or a xenon lamp. In various embodiments, two or more lenses (IR cameras, wide-angle and telephoto lenses) and image sensors may be arranged on one surface of the electronic device 101.

The key input device 317 may be arranged on the side surface 310C of the housing 310. In another embodiment, the electronic device 300 may not include some or all of the key input devices 317, and the key input devices 317 that are not included in the electronic device 300 may be implemented in other forms, such as soft keys, on the display 301. In various embodiments, the key input device may include the sensor module 316 arranged on the second surface 310B of the housing 310.

The light-emitting device 306 may be arranged on, for example, the first surface 310A of the housing 310. For example, the light-emitting device 306 may provide state information of the electronic device 101 in the form of light. In another embodiment, for example, the light-emitting device 306 may provide a light source that is linked to an operation of the camera module 305. The light-emitting device 306 may include, for example, an light-emitting diode (LED), an IR LED, and a xenon lamp.

The connector holes 308 and 309 may include a first connector hole 308 for accommodating a connector (e.g., a Universal Serial Bus (USB) connector) for transmitting and receiving power and/or data to and from an external electronic device, and/or a second connector hole (e.g., an earphone jack) 309 for accommodating a connector for transmitting and receiving audio signals to and from an external electronic device.

The electronic device 300 illustrated in FIGS. 17 and 18 is an example, and does not limit the configuration of a device to which the technical spirit of the present disclosure is applied. The technical spirit of the present disclosure may be applied to various user devices including the first camera module 305 arranged on the first surface 310A, and the second camera module 312a and the third camera module 312b arranged on the second surface 310B. For example, by using a flexible display and a hinge structure, the technical spirit of the present disclosure may also be applied to an electronic device foldable in the horizontal direction or the vertical direction, a tablet, or a notebook computer. In addition, the technical spirit of the present disclosure may also be applied in a case where the first camera module 305, the second camera module 312a, and the third camera module 312b facing in the same direction are able to face in different directions through rotation, folding, transformation, or the like of the device.

According to various embodiments, the illustrated electronic device 300 may be a portion of a rollable electronic device. The term "rollable electronic device" may refer to an electronic device in which a display (e.g., the display 301 of FIG. 17) may be bent, and thus, at least a portion thereof may be wound or rolled or may be accommodated in a housing (e.g., the housing 310 of FIGS. 17 and 18). The rollable electronic device may be used with an extended screen display region by unfolding the display or exposing a larger area of the display to the outside according to the user's needs.

FIG. 19 is a block diagram of the electronic device 401 in a network environment 400, according to various embodiments. Referring to FIG. 19, in the network environment 400, the electronic device 401 may communicate with an electronic device 402 through a first network 498 (e.g., a short-range wireless communication network), or may communicate with at least one of an electronic device 404 or a server 408 through a second network 499 (e.g., a long-range wireless communication network). According to an embodiment, the electronic device 401 may communicate with the electronic device 404 through the server 408. According to an embodiment, the electronic device 401 may include the processor 420, a memory 430, an input module 450, an audio output module 455, a display module 460, an audio module 470, a sensor module 476, an interface 477, a connection terminal 478, a haptic module 479, a camera module 480, a power management module 488, a battery 489, a communication module 490, a subscriber identification module 496, or an antenna module 497. In some embodiments, at least one of these components (e.g., the connection terminal 478) may be omitted from the electronic device 401, or one or more other components may be added to the electronic device 401. In some embodiments, some of these components (e.g., the sensor module 476, the camera module 480, or the antenna module 497) may be integrated into one component (e.g., the display module 460).

The processor 420 may execute, for example, software (e.g., the program 440) to control at least one of other components (e.g., a hardware or software component) of the electronic device 401, which is connected to the processor 420, and perform various types of data processing or computation. According to an embodiment, as at least part of the data processing or computation, the processor 420 may store a command or data received from another component (e.g., the sensor module 476 or the communication module 490) in a volatile memory 432, process the command or data stored in the volatile memory 432, and store resulting data in a non-volatile memory 434. According to an embodiment, the processor 420 may include a main processor 421 (e.g., a central processing unit or an application processor) or an auxiliary processor 423 (e.g., a graphics processing unit, a neural processing unit (NPU), an image signal processor, a sensor hub processor, or a communication processor) that may be operated together with or independently of the main processor 421. For example, in a case where the electronic device 401 includes the main processor 421 and the auxiliary processor 423, the auxiliary processor 423 may use less power than the main processor 421 or may be set to be specialized for a designated function. The auxiliary processor 423 may be implemented separately from or as part of the main processor 421.

For example, the auxiliary processor 423 may control at least some of functions or states related to at least one component (e.g., the display module 460, the sensor module 476, or the communication module 490) among the components of the electronic device 401, on behalf of the main processor 421 while the main processor 421 is in an inactive (e.g., sleep) state, or together with the main processor 421 while the main processor 421 is in an active (e.g., application execution) state. According to an embodiment, the auxiliary processor 423 (e.g., an image signal processor or a communication processor) may be implemented as part of another component (e.g., the camera module 480 or the communication module 490) functionally related thereto. According to an embodiment, the auxiliary processor 423 (e.g., a neural network processing device) may include a hardware structure specialized for processing of an artificial intelligence model. The artificial intelligence model may be generated through machine learning. For example, such learning may be performed, by the electronic device 401 in which the artificial intelligence model is executed, or may be performed by a separate server (e.g., the server 408). Examples of learning algorithms may include, for example, supervised learning, unsupervised learning, semi-supervised learning, and reinforcement learning, but are not limited thereto. The artificial intelligence model may include a plurality of neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination thereof, but is not limited thereto. The artificial intelligence model may additionally or alternatively include a software structure in addition to the hardware structure.

The memory 430 may store various pieces of data to be used by at least one component (e.g., the processor 420 or the sensor module 476) of the electronic device 401. The data may include, for example, software (e.g., the program 440) and input data or output data related to a command associated with the software. The memory 430 may include the volatile memory 432 or the non-volatile memory 434.

The program 440 may be stored as software in the memory 430 and may include, for example, an operating system 442, middleware 444, or an application 446.

The input module 450 may receive, from the outside (e.g., the user) of the electronic device 401, a command or data to be used by a component (e.g., the processor 420) of the electronic device 401. The input module 450 may include, for example, a microphone, a mouse, a keyboard, a key (e.g., a button), or a digital pen (e.g., a stylus pen).

The audio output module 455 may output an audio signal to the outside of the electronic device 401. The audio output module 455 may include, for example, a speaker or a receiver. The speaker may be used for general purposes, such as reproducing multimedia or record. The receiver may be used to receive an incoming call. According to an embodiment, the receiver may be implemented separately from, or as part of the speaker.

The display module 460 may visually provide information to the outside (e.g., the user) of the electronic device 401. The display module 460 may include, for example, a display, a hologram device, or a projector, and a control circuit for controlling the corresponding device. According to an embodiment, the display module 460 may include a touch sensor configured to detect a touch, or a pressure sensor configured to measure the intensity of force generated by the touch.

The audio module 470 may convert a sound into an electrical signal or vice versa. According to an embodiment, the audio module 470 may obtain a sound through the input module 450 or output a sound through the audio output module 455 or an external electronic device (e.g., the electronic device 402 (e.g., a speaker or headphones)) directly or wirelessly connected to the electronic device 401.

The sensor module 476 may detect an operating state (e.g., power or a temperature) of the electronic device 401 or an external environment state (e.g., a user state) and generate an electrical signal or a data value corresponding to the detected state. According to an embodiment, the sensor module 476 may include, for example, a gesture sensor, a gyro sensor, an atmospheric pressure sensor, a magnetic sensor, an acceleration sensor, a grip sensor, a proximity sensor, a color sensor, an IR sensor, a biometric sensor, a temperature sensor, a humidity sensor, or an illuminance sensor.

The interface 477 may support one or more designated protocols, which may be used to directly or wirelessly connect the electronic device 401 to an external electronic device (e.g., the electronic device 402). According to an embodiment, the interface 477 may include, for example, a high-definition multimedia interface (HDMI), a USB interface, a secure digital (SD) card interface, or an audio interface.

The connection terminal 478 may include a connector through which the electronic device 401 may be physically connected to an external electronic device (e.g., the electronic device 402). According to an embodiment, the connection terminal 478 may include, for example, an HDMI connector, a USB connector, an SD card connector, or an audio connector (e.g., a headphone connector).

The haptic module 479 may convert an electrical signal into a mechanical stimulus (e.g., vibration or movement) or an electrical stimulus that may be recognized by a user through his/her tactile or motion sensation. According to an embodiment, the haptic module 479 may include, for example, a motor, a piezoelectric device, or an electrical stimulation device.

The camera module 480 may capture a still image or a moving image. According to an embodiment, the camera module 480 may include one or more lenses, image sensors, image signal processors, or flashes.

The power management module 488 may manage power supplied to the electronic device 401. According to an embodiment, the power management module 488 may be implemented, for example, as at least part of a power management integrated circuit (PMIC).

The battery 489 may supply power to at least one component of the electronic device 401. According to an embodiment, the battery 489 may include, for example, a non-rechargeable primary cell, a rechargeable secondary cell, or a fuel cell.

The communication module 490 may establish a direct (e.g., wired) communication channel or a wireless communication channel between the electronic device 401 and an external electronic device (e.g., the electronic device 102, the electronic device 404, or the server 408) and support communication through the established communication channel. The communication module 490 may include one or more communication processors that operate independently of the processor420 (e.g., an application processor) and support direct (e.g., wired) communication or wireless communication. According to an embodiment, the communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication module). The corresponding communication module among these communication modules may communicate with the external electronic device 404 through the first network 498 (e.g., a short-range communication network such as Bluetooth, Wi-Fi Direct, or Infrared Data Association (IrDA)) or the second network 499 (e.g., a long-range communication network such as a legacy cellular network, a 5G network, a next-generation communication network, the Internet, or a computer network (e.g., a LAN or wide area network (WAN)). These types of communication modules may be integrated into one component (e.g., a single chip) or implemented by a plurality of separate components (e.g., a plurality of chips). The wireless communication module 492 may identify or authenticate the electronic device 401 within a communication network such as the first network 498 and/or the second network 499 by using subscriber information (e.g., an international mobile subscriber identifier (IMSI)) stored in the subscriber identification module 496.

The wireless communication module 492 may support 5G network and next-generation communication technology after 4G network, for example, New Radio (NR) access technology. The NR access technology may support high-speed transmission of high-capacity data (enhanced mobile broadband (eMBB)), terminal power minimization and multiple terminal accesses (massive machine-type communications (mMTC)), or ultra-reliable low latency communications (URLLC). The wireless communication module 492 may support a high-frequency band (e.g., a mmWave band), for example, to achieve a high data transmission rate. The wireless communication module 492 may support various techniques for securing performance in a high-frequency band, for example, beamforming, massive multiple-input and multiple-output (MIMO), full dimensional MIMO (FD-MIMO), array antenna, analog beamforming, or large-scale antenna. The wireless communication module 492 may support various requirements specified in the electronic device 401, an external electronic device (e.g., the electronic device 404), or a network system (e.g., the second network 499). According to an embodiment, the wireless communication module 492 may support a peak data rate (e.g., 20 Gbps or greater) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 497 may transmit a signal or power to the outside (e.g., an external electronic device) or receive a signal or power from the outside. According to an embodiment, the antenna module 497 may include an antenna including a radiator including a conductive material or a conductive pattern formed on a substrate (e.g., a printed circuit board (PCB)). According to an embodiment, the antenna module 497 may include a plurality of antennas (e.g., an array antenna). In this case, at least one antenna suitable for a communication scheme used in a communication network such as the first network 498 or the second network 499 may be selected from the plurality of antennas by, for example, the communication module 490. The signal or power may be transmitted or received between the communication module 490 and an external electronic device through the selected at least one antenna. According to some embodiments, a component (e.g., a radio-frequency integrated circuit (RFIC)) other than the radiator may be additionally formed as part of the antenna module 497.

According to various embodiments, the antenna module 497 may form a mmWave antenna module. According to an embodiment, the mmWave antenna module may include a PCB, a RFIC arranged on a first surface (e.g., the bottom surface) of the PCB, or adjacent to the first surface and capable of supporting a specified high-frequency band (e.g., a mmWave band), and a plurality of antennas (e.g., an array antenna) arranged on a second surface (e.g., the top or a side surface) of the PCB, or adjacent to the second surface and capable of transmitting or receiving signals of the specified high-frequency band.

At least some of the components may be connected to each other in a peripheral device communication scheme (e.g., a bus, a general-purpose input and output (GPIO), a serial peripheral interface (SPI), or a mobile industry processor interface (MIPI)) and exchange a signal (e.g., a command or data) with each other.

According to an embodiment, a command or data may be transmitted or received between the electronic device 401 and the external electronic device 404 via the server 408 connected over the second network 499. Each of the external electronic devices 402 and 404 may be of the same type as, or a different type from the electronic device 401. According to an embodiment, all or some of operations executed by the electronic device 401 may be executed by at least one of the electronic devices 402 and 404 and the server 408. For example, when the electronic device 401 is supposed to perform a certain function or service automatically or in response to a request from the user or another device, the electronic device 401 may request one or more external electronic devices to perform at least part of the function or service, additionally or instead of autonomously executing the function or service. The one or more external electronic devices having received the request may execute the at least part of the requested functions or services or an additional function or service related to the request, and transmit a result of the execution to the electronic device 401. The electronic device 401 may process the result as it is or additionally and provide the processing result as at least part of a response to the request. To this end, for example, cloud computing, distributed computing, mobile edge computing (MEC), or client-server computing technology may be used. The electronic device 401 may provide an ultra-low latency service by using, for example, distributed computing or MEC. In another embodiment, the external electronic device 404 may include an Internet-of-Things (IoT) device. The server 408 may be an intelligent server using machine learning and/or a neural network. According to an embodiment, the external electronic device 404 or the server 408 may be included in the second network 499. The electronic device 401 may be applied to intelligent services (e.g., smart homes, smart cities, smart cars, or health care) based on 5G communication technologies and IoT-related technologies.

FIG. 20 is a block diagram 500 illustrating the camera module 480 according to various embodiments. Referring to FIG. 20, the camera module 480 may include a lens assembly 510, a flash 520, an image sensor 530, an image stabilizer 540, a memory 550 (e.g., a buffer memory), or an image signal processor 560. The lens assembly 510 may collect light emitted from an object to be image-captured. The lens assembly 510 may include one or more lenses. The embodiments described above with reference to FIGS. 1 to 16 may be applied to the lens assembly 510. According to an embodiment, the camera module 480 may include a plurality of lens assemblies 510. In this case, the camera module 480 may form, for example, a dual camera, a 360-degree camera, or a spherical camera. Some of the plurality of lens assemblies 510 may have the same lens properties (e.g., field of view, focal length, auto focus, F-number, or optical zoom), or at least one lens assembly may have one or more lens properties that are different from those of the other lens assemblies. The lens assembly 510 may include, for example, a wide-angle lens or a telephoto lens.

The flash 520 may emit light used to enhance light emitted or reflected from an object. According to an embodiment, the flash 520 may include one or more light-emitting diodes (e.g., red-green-blue (RGB) LEDs, white LEDs, IR LEDs, or ultraviolet LEDs), or a xenon lamp. The image sensor 530 may obtain an image corresponding to an object by converting light emitted or reflected from the object and transmitted through the lens assembly 510, into an electrical signal. According to an embodiment, the image sensor 530 may include, for example, one image sensor selected from among image sensors having different properties, such as an RGB sensor, a black-and-white (BW) sensor, an IR sensor, or a UV sensor, a plurality of image sensors having the same properties, or a plurality of image sensors having different properties. Each image sensor included in the image sensor 530 may be implemented by using, for example, a CCD sensor or a CMOS sensor.

The image stabilizer 540 may move at least one lens or the image sensor 530 included in the lens assembly 510 in a particular direction or control operation characteristics of the image sensor 530 (e.g., adjustment of read-out timing), in response to a movement of the camera module 480 or the electronic device 401 including the same. This may compensate for at least some of the adverse effects of a movement on a captured image. According to an embodiment, the image stabilizer 540 may detect such a movement of the camera module 480 or the electronic device 401 by using a gyro sensor (not shown) or an acceleration sensor (not shown) arranged inside or outside the camera module 480. According to an embodiment, the image stabilizer 540 may be implemented as, for example, an optical image stabilizer. The memory 550 may temporarily store at least part of an image obtained through the image sensor 530 for the next image processing operation. For example, when image obtaining is delayed according to the shutter or a plurality of images are obtained at high speed, an obtained original image (e.g., Bayer-patterned image or high-resolution image) may be stored in the memory 550 and a copy image (e.g., a low-resolution image) corresponding thereto may be previewed through the display module 460. Thereafter, when a designated condition is satisfied (e.g., a user input or a system command), at least part of the original image stored in the memory 550 may be obtained and processed by, for example, the image signal processor 560. According to an embodiment, as at least part of the memory 430, the memory 550 may be configured as a separate memory that is operated independently of the memory 430.

The image signal processor 560 may perform one or more image processes on an image obtained through the image sensor 530 or an image stored in the memory 550. The one or more image processes may include, for example, depth map generation, three-dimensional modeling, panorama generation, feature point extraction, image synthesis, and/or image compensation (e.g., noise reduction, resolution adjustment, brightness adjustment, blurring, sharpening, or softening). Additionally or alternatively, the image signal processor 560 may perform control (e.g., exposure time control or read-out timing control) on at least one (e.g., the image sensor 530) of the components included in the camera module 480. The image processed by the image signal processor 560 may be stored back in the memory 550 for further processing or may be provided to the external component (e.g., the memory 430, the display module 460, the electronic device 402, the electronic device 404, or the server 408) of the camera module 480. According to an embodiment, the image signal processor 560 may be configured as at least part of the processor 420 or as a separate processor that is operated independently of the processor 420. In a case where the image signal processor 560 is configured as a separate processor from the processor 420, at least one image processed by the image signal processor 560 may be displayed through the display module 460 as it is or after additional image processing by the processor 420.

According to an embodiment, the electronic device 401 may include a plurality of camera modules 480 having different properties or functions. In this case, for example, at least one of the plurality of camera modules 480 may be a wide-angle camera, and at least another one may be a telephoto camera. Similarly, at least one of the plurality of camera modules 480 may be a front camera, and at least another one may be a rear camera.

According to various embodiments, a lens assembly includes a plurality of lenses arranged from an object side to an image side on which an image plane is located, wherein the plurality of lenses include: a first lens group that includes at least one lens having a positive refractive power, and is fixed to maintain a constant distance from the image plane during focusing; and a second lens group that includes a lens having at least one aspheric surface, and is configured to perform image plane alignment according to a change in an object distance of an object, and the lens assembly satisfies the following Equation:

<Equation>

$$FOV < 15 \text{ (degree)},$$

wherein FOV denotes a half-angle of view of the lens assembly.

The second lens group may satisfy the following equation:

<Equation>

$$0.5 < FL2/EFL < 1.1,$$

wherein FL2 denotes a focal length of the second lens group, and EFL denotes a total focal length of the lens assembly.

The lens assembly may satisfy the following equation:

<Equation>

$$0.8 < EFL/TTL < 1.2,$$

wherein EFL denotes a total focal length of the lens assembly, and TTL denotes a total distance of the lens assembly.

The first lens group may further include one or more aspherical lenses and one or more negative lenses.

A reflective member may be further provided on an object side of the first lens group.

The reflective member may perform camera shake correction.

The second lens group may perform camera shake correction.

The first lens group may further include a first lens having a positive refractive power, a second lens having a negative refractive power, a third lens having a positive refractive power, and a fourth lens having a negative refractive power.

The first lens may include an object-side surface that is convex toward the object side.

The first lens may be a biconvex lens or a meniscus lens that is convex toward the object side.

The second lens may be a biconcave lens.

The second lens group may further include one aspherical lens.

The aspherical lens may be a meniscus lens that is convex toward the object side, or a meniscus lens that is convex toward the image side.

According to various embodiments, an electronic device includes: a lens assembly including a plurality of lenses arranged from an object side to an image side on which an image plane is located; at least one camera configured to obtain information about an object from light incident through the lens assembly; and an image signal processor configured to process an image of the object, based on the information, wherein the plurality of lens of the lens assembly include a first lens group that includes at least one lens having a positive refractive power, and is fixed to maintain a constant distance from the image plane during focusing, and a second lens group that includes a lens having at least one aspheric surface, and is configured to perform image plane alignment according to a change in an object distance of an object, and the lens assembly satisfies a following Equation:

<Equation>

$$FOV < 15 \text{ (degree)},$$

wherein FOV denotes a half-angle of view of the lens assembly.

The embodiments disclosed herein are presented for explanation and understanding of the disclosed technology, and does not limit the scope of the technology described herein. Thus, the scope of the present disclosure should be construed to include all changes or various other embodiments based on the technical concept of the present specification. The above-described embodiments are merely exemplary, and various modifications and equivalent other embodiments are possible from those skilled in the art to which the present technology pertains to. Therefore, the true technical protection scope according to the embodiments of the present disclosure should be determined by the technical concept of the present disclosure defined in the claims below.

## Claims

1.  A lens assembly comprising a plurality of lenses arranged from an object side to an image side on which an image plane is located, wherein the lens assembly comprises:

    a first lens group that comprises at least one lens having a positive refractive power, and is fixed to maintain a constant distance from the image plane during focusing; and
    a second lens group that comprises a lens having at least one aspheric surface, and is configured to perform image plane alignment according to a change in an object distance of an object, and

the lens assembly satisfies the following Equation:

<Equation>

$$FOV < 15 \text{ (degree)},$$

wherein FOV denotes a half-angle of view of the lens assembly.

2. The lens assembly of claim 1, wherein the second lens group satisfies the following Equation:

<Equation>

$$0.5 < FL2/EFL < 1.1,$$

wherein FL2 denotes a focal length of the second lens group, and EFL denotes a total focal length of the lens assembly.

3. The lens assembly of claim 1, wherein the lens assembly satisfies the following Equation:

<Equation>

$$0.8 < EFL/TTL < 1.2,$$

wherein EFL denotes a total focal length of the lens assembly, and TTL denotes a total distance of the lens assembly.

4. The lens assembly of claim 1, wherein the first lens group further comprises one or more aspherical lenses and one or more negative lenses.

5. The lens assembly of claim 1, further comprising a reflective member on the object side of the first lens group.

6. The lens assembly of claim 5, wherein the reflective member is configured to perform camera shake correction.

7. The lens assembly of claim 1, wherein the second lens group is further configured to perform camera shake correction.

8. The lens assembly of claim 1, wherein the first lens group further comprises a first lens having a positive refractive power, a second lens having a negative refractive power, a third lens having a positive refractive power, and a fourth lens having a negative refractive power.

9. The lens assembly of claim 8, wherein the first lens comprises an object-side surface that is convex toward the object side.

10. The lens assembly of claim 8, wherein the first lens is a biconvex lens or a meniscus lens that is convex toward the object side.

11. The lens assembly of claim 8, wherein the second lens is a biconcave lens.

12. The lens assembly of claim 1, wherein the second lens group further comprises one aspherical lens.

13. The lens assembly of claim 12, wherein the aspherical lens is a meniscus lens that is convex toward the object side, or a meniscus lens that is convex toward the image side.

14. An electronic device comprising:

a lens assembly comprising a plurality of lenses arranged from an object side to an image side on which an image plane is located;
at least one camera configured to obtain information about an object from light incident through the lens assembly; and
an image signal processor configured to process an image of the object, based on the information,

wherein the lens assembly comprises a first lens group that comprises at least one lens having a positive refractive power, and is fixed to maintain a constant distance from the image plane during focusing, and a second lens group that comprises a lens having at least one aspheric surface, and is configured to perform image plane alignment according to a change in an object distance of an object, and

the lens assembly satisfies the following Equation:

<Equation>

$$FOV < 15 \text{ (degree)},$$

wherein FOV denotes a half-angle of view of the lens assembly.

15. The electronic device of claim 14, wherein the second lens group satisfies the following Equation:

<Equation>

$$0.5 < FL2/EFL < 1.1,$$

wherein FL2 denotes a focal length of the second lens group, and EFL denotes a total focal length of the lens assembly.

# FIG. 1

## FIG. 2

LONGITUDINAL
SPHERICAL ABERRATION

ASTIGMATIC FIELD CURVES
IMG HT

DISTORTION
IMG HT

656.3000 NM
587.6000 NM
546.1000 NM
486.1000 NM
435.8000 NM

FOCUS (MILLIMETERS)

FOCUS (MILLIMETERS)

% DISTORTION

EP 4 357 833 A1

29

# FIG. 3

EP 4 357 833 A1

| | |
|---|---|
| —·——·— | 656.3000 NM |
| —————— | 587.6000 NM |
| ———— | 546.1000 NM |
| —·——·— | 486.1000 NM |
| ············ | 435.8000 NM |

LONGITUDINAL
SPHERICAL ABERRATION

1.00
0.75
0.50
0.25

-0.20  -0.10   0.0   0.10   0.20

FOCUS (MILLIMETERS)

ASTIGMATIC FIELD CURVES
IMG HT

Y X 2.50
1.88
1.25
0.63

-0.20  -0.10   0.0   0.10   0.20

FOCUS (MILLIMETERS)

DISTORTION
IMG HT

2.50
1.88
1.25
0.63

-5.0   -2.5    0.0    2.5    5.0

% DISTORTION

# FIG. 4

...

# FIG. 5

# FIG. 6

EP 4 357 833 A1

| | |
|---|---|
| ------- | 656.3000 NM |
| ------ | 587.6000 NM |
| ——— | 546.1000 NM |
| —·— | 486.1000 NM |
| ·········· | 435.8000 NM |

LONGITUDINAL
SPHERICAL ABERRATION

ASTIGMATIC FIELD CURVES
IMG HT

DISTORTION
IMG HT

-0.20  -0.10   0.0   0.10   0.20

FOCUS (MILLIMETERS)

-0.20  -0.10   0.0   0.10   0.20

FOCUS (MILLIMETERS)

-5.0   -2.5   0.0   2.5   5.0

% DISTORTION

# FIG. 7

EP 4 357 833 A1

| | 656.3000 NM |
|---|---|
| | 587.6000 NM |
| | 546.1000 NM |
| | 486.1000 NM |
| | 435.8000 NM |

LONGITUDINAL
SPHERICAL ABERRATION

ASTIGMATIC FIELD CURVES
IMG HT

DISTORTION
IMG HT

FOCUS (MILLIMETERS)

FOCUS (MILLIMETERS)

% DISTORTION

# FIG. 8

# FIG. 9

EP 4 357 833 A1

| | 656.3000 NM |
|---|---|
| | 587.6000 NM |
| | 546.1000 NM |
| | 486.1000 NM |
| | 435.8000 NM |

LONGITUDINAL
SPHERICAL ABERRATION

ASTIGMATIC FIELD CURVES
IMG HT

DISTORTION
IMG HT

FOCUS (MILLIMETERS)

FOCUS (MILLIMETERS)

% DISTORTION

# FIG. 10

EP 4 357 833 A1

LONGITUDINAL
SPHERICAL ABERRATION

ASTIGMATIC FIELD CURVES
IMG HT

DISTORTION
IMG HT

656.3000 NM
587.6000 NM
546.1000 NM
486.1000 NM
435.8000 NM

FOCUS (MILLIMETERS)

FOCUS (MILLIMETERS)

% DISTORTION

# FIG. 11

# FIG. 12

EP 4 357 833 A1

LONGITUDINAL
SPHERICAL ABERRATION

ASTIGMATIC FIELD CURVES
IMG HT

DISTORTION
IMG HT

656.3000 NM
587.6000 NM
546.1000 NM
486.1000 NM
435.8000 NM

FOCUS (MILLIMETERS)

FOCUS (MILLIMETERS)

% DISTORTION

## FIG. 13

EP 4 357 833 A1

| | |
|---|---|
| –·–··– | 656.3000 NM |
| – – – – | 587.6000 NM |
| ──── | 546.1000 NM |
| –·–·– | 486.1000 NM |
| ·········· | 435.8000 NM |

LONGITUDINAL
SPHERICAL ABERRATION

ASTIGMATIC FIELD CURVES

IMG HT

DISTORTION

IMG HT

FOCUS (MILLIMETERS)

FOCUS (MILLIMETERS)

% DISTORTION

# FIG. 14

# FIG. 15

EP 4 357 833 A1

| | |
|---|---|
| —··— | 656.3000 NM |
| ----- | 587.6000 NM |
| —— | 546.1000 NM |
| —·— | 486.1000 NM |
| ········· | 435.8000 NM |

LONGITUDINAL
SPHERICAL ABERRATION

1.00

0.75

0.50

0.25

-0.20    -0.10    0.0    0.10    0.20

FOCUS (MILLIMETERS)

ASTIGMATIC FIELD CURVES

IMG HT

Y    X  2.50

1.88

1.25

0.63

-0.20    -0.10    0.0    0.10    0.20

FOCUS (MILLIMETERS)

DISTORTION

IMG HT

2.50

1.88

1.25

0.63

-5.0    -2.5    0.0    2.5    5.0

% DISTORTION

# FIG. 16

# FIG. 17

EP 4 357 833 A1

# FIG. 18

500

480

CAMERA MODULE

520

FLASH

510

LENS ASSEMBLY

530

IMAGE SENSOR

540

IMAGE STABILIZER

550

MEMORY

560

IMAGE SIGNAL PROCESSOR

FIG. 19

EP 4 357 833 A1

# FIG. 20

500

480

## CAMERA MODULE

520

FLASH

510

LENS
ASSEMBLY

530

IMAGE SENSOR

560

IMAGE SIGNAL
PROCESSOR

540

IMAGE STABILIZER

550

MEMORY

## INTERNATIONAL SEARCH REPORT

| International application No. |
|---|
| **PCT/KR2022/008394** |

### A. CLASSIFICATION OF SUBJECT MATTER

**G02B 15/14**(2006.01)i; **G02B 15/22**(2006.01)i; **G02B 3/00**(2006.01)i; **G02B 3/04**(2006.01)i; **G02B 27/64**(2006.01)i; **G03B 17/12**(2006.01)i; **H04N 5/225**(2006.01)i

According to International Patent Classification (IPC) or to both national classification and IPC

### B. FIELDS SEARCHED

Minimum documentation searched (classification system followed by classification symbols)

G02B 15/14(2006.01); G02B 11/04(2006.01); G02B 11/28(2006.01); G02B 13/02(2006.01); G02B 25/00(2006.01); G02B 26/08(2006.01); G02B 27/64(2006.01); G02B 9/10(2006.01); G02B 9/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 망원 렌즈(telephoto lens), 전장(total length), 초점 거리(focus length), 메니스커스 렌즈(meniscus lens), 비구면 렌즈(aspherical lens)

### C. DOCUMENTS CONSIDERED TO BE RELEVANT

| Category* | Citation of document, with indication, where appropriate, of the relevant passages | Relevant to claim No. |
|---|---|---|
| X | KR 10-2016-0000759 A (SAMSUNG ELECTRONICS CO., LTD.) 05 January 2016 (2016-01-05)<br>See paragraphs [0002]-[0069]; claims 1, 6 and 14-16; and figure 1. | 1,4-5,12-14 |
| Y | | 2-3,6-11,15 |
| Y | KR 10-2011-0129632 A (SAMSUNG TECHWIN CO., LTD.) 02 December 2011 (2011-12-02)<br>See paragraph [0043]; claims 1 and 4; and figure 1. | 2,15 |
| Y | KR 10-2017-0056255 A (SAMSUNG ELECTRONICS CO., LTD.) 23 May 2017 (2017-05-23)<br>See claim 1. | 3 |
| Y | KR 10-2018-0095420 A (SAMSUNG ELECTRO-MECHANICS CO., LTD.) 27 August 2018 (2018-08-27)<br>See paragraph [0042]; and figure 3a. | 6 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2022** | **08 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/008394**

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2009-0126817 A (SAMSUNG DIGITAL IMAGING CO., LTD.) 09 December 2009 (2009-12-09) See paragraph [0028]; claim 1; and figure 1. | 7 |
| Y | KR 10-1999-0016336 A (SAMSUNG AEROSPACE INDUSTRIES, LTD.) 05 March 1999 (1999-03-05) See paragraphs [0067]-[0089]; claim 1; and figures 1a-1b. | 8-11 |

Form PCT/ISA/210 (second sheet) (July 2019)

INTERNATIONAL SEARCH REPORT
Information on patent family members

International application No.

**PCT/KR2022/008394**

| Patent document cited in search report | | | Publication date (day/month/year) | Patent family member(s) | | | Publication date (day/month/year) |
|---|---|---|---|---|---|---|---|
| KR | 10-2016-0000759 | A | 05 January 2016 | | None | | |
| KR | 10-2011-0129632 | A | 02 December 2011 | KR | 10-1429517 | B1 | 12 August 2014 |
| KR | 10-2017-0056255 | A | 23 May 2017 | CN | 108351493 | A | 31 July 2018 |
| | | | | CN | 108351493 | B | 26 October 2021 |
| | | | | EP | 3341779 | A1 | 04 July 2018 |
| | | | | EP | 3341779 | A4 | 26 September 2018 |
| | | | | EP | 3341779 | B1 | 03 March 2021 |
| | | | | US | 10788651 | B2 | 29 September 2020 |
| | | | | US | 2017-0139184 | A1 | 18 May 2017 |
| | | | | WO | 2017-082480 | A1 | 18 May 2017 |
| KR | 10-2018-0095420 | A | 27 August 2018 | CN | 108459451 | A | 28 August 2018 |
| | | | | CN | 108459451 | B | 22 June 2021 |
| | | | | CN | 208060910 | U | 06 November 2018 |
| | | | | KR | 10-1973434 | B1 | 29 April 2019 |
| | | | | US | 10534194 | B2 | 14 January 2020 |
| | | | | US | 11269194 | B2 | 08 March 2022 |
| | | | | US | 2018-0239162 | A1 | 23 August 2018 |
| | | | | US | 2020-0103673 | A1 | 02 April 2020 |
| KR | 10-2009-0126817 | A | 09 December 2009 | AU | 2011-299054 | A1 | 04 April 2013 |
| | | | | AU | 2011-299054 | B2 | 07 May 2015 |
| | | | | AU | 2011-299067 | A1 | 04 April 2013 |
| | | | | AU | 2011-299067 | B2 | 14 May 2015 |
| | | | | AU | 2011-299126 | A1 | 04 April 2013 |
| | | | | AU | 2011-299126 | B2 | 30 April 2015 |
| | | | | BR | 112013004225 | A2 | 05 July 2016 |
| | | | | BR | 112013004225 | B1 | 21 January 2020 |
| | | | | BR | 112013004225 | B8 | 04 February 2020 |
| | | | | BR | 112013004226 | A2 | 05 July 2016 |
| | | | | BR | 112013004227 | A2 | 05 July 2016 |
| | | | | CA | 2810422 | A1 | 15 March 2012 |
| | | | | CA | 2810422 | C | 04 October 2016 |
| | | | | CA | 2810425 | A1 | 15 March 2012 |
| | | | | CA | 2810425 | C | 24 January 2017 |
| | | | | CA | 2810519 | A1 | 15 March 2012 |
| | | | | CA | 2810519 | C | 20 December 2016 |
| | | | | CN | 103097002 | A | 08 May 2013 |
| | | | | CN | 103097002 | B | 27 January 2016 |
| | | | | CN | 103097003 | A | 08 May 2013 |
| | | | | CN | 103097003 | B | 12 October 2016 |
| | | | | CN | 103282100 | A | 04 September 2013 |
| | | | | CN | 103282100 | B | 25 November 2015 |
| | | | | EP | 2613867 | A1 | 17 July 2013 |
| | | | | EP | 2613867 | B1 | 02 May 2018 |
| | | | | EP | 2613868 | A1 | 17 July 2013 |
| | | | | EP | 2613868 | B1 | 20 November 2019 |
| | | | | EP | 2621608 | A1 | 07 August 2013 |
| | | | | EP | 2621608 | B1 | 28 August 2019 |
| | | | | ES | 2754801 | T3 | 20 April 2020 |
| | | | | ES | 2767059 | T3 | 16 June 2020 |
| | | | | JP | 2013-542058 | A | 21 November 2013 |

Form PCT/ISA/210 (patent family annex) (July 2019)

INTERNATIONAL SEARCH REPORT
Information on patent family members

International application No.

**PCT/KR2022/008394**

| Patent document cited in search report | Publication date (day/month/year) | Patent family member(s) | | Publication date (day/month/year) |
|---|---|---|---|---|
| | | JP 2013-542059 | A | 21 November 2013 |
| | | JP 2013-542060 | A | 21 November 2013 |
| | | JP 5878539 | B2 | 08 March 2016 |
| | | MX 2013002631 | A | 09 May 2013 |
| | | MX 2013002633 | A | 09 May 2013 |
| | | MX 2013002700 | A | 22 May 2013 |
| | | MX 336570 | B | 25 January 2016 |
| | | MX 336817 | B | 02 February 2016 |
| | | MX 337509 | B | 09 March 2016 |
| | | SG 188445 | A1 | 31 May 2013 |
| | | SG 188447 | A1 | 30 April 2013 |
| | | SG 188450 | A1 | 30 April 2013 |
| | | US 2009-0303596 | A1 | 10 December 2009 |
| | | US 2011-0317267 | A1 | 29 December 2011 |
| | | US 2012-0060686 | A1 | 15 March 2012 |
| | | US 2012-0061614 | A1 | 15 March 2012 |
| | | US 2012-0063977 | A1 | 15 March 2012 |
| | | US 2012-0063978 | A1 | 15 March 2012 |
| | | US 2012-0063979 | A1 | 15 March 2012 |
| | | US 2012-0063980 | A1 | 15 March 2012 |
| | | US 2016-0038872 | A1 | 11 February 2016 |
| | | US 8031411 | B2 | 04 October 2011 |
| | | US 8305687 | B2 | 06 November 2012 |
| | | US 8715397 | B2 | 06 May 2014 |
| | | US 9028785 | B2 | 12 May 2015 |
| | | US 9034288 | B2 | 19 May 2015 |
| | | US 9186616 | B2 | 17 November 2015 |
| | | US 9186617 | B2 | 17 November 2015 |
| | | US 9186618 | B2 | 17 November 2015 |
| | | US 9713788 | B2 | 25 July 2017 |
| | | WO 2012-033973 | A1 | 15 March 2012 |
| | | WO 2012-033986 | A2 | 15 March 2012 |
| | | WO 2012-033986 | A3 | 24 May 2012 |
| | | WO 2012-033991 | A1 | 15 March 2012 |
| | | WO 2012-034003 | A1 | 15 March 2012 |
| | | WO 2012-034027 | A1 | 15 March 2012 |
| | | WO 2012-034040 | A1 | 15 March 2012 |
| KR 10-1999-0016336 A | 05 March 1999 | KR 10-0280313 | B1 | 01 February 2001 |

Form PCT/ISA/210 (patent family annex) (July 2019)